# EUROPEAN PATENT SPECIFICATION

(11) **EP 3 198 376 B1**
(45) Date of publication and mention of the grant of the patent: **26.02.2020**
(21) Application number: 15843435.7
(22) Date of filing: 25.09.2015
(51) Int. Cl.: G06F 3/01, G06F 3/0481, G06F 3/16, A47G 1/02, A47F 7/19

(54) **IMAGE DISPLAY METHOD PERFORMED BY DEVICE INCLUDING SWITCHABLE MIRROR AND THE DEVICE**
VON EINER VORRICHTUNG DURCHGEFÜHRTES BILDANZEIGEVERFAHREN MIT SCHALTBAREM SPIEGEL UND VORRICHTUNG
PROCÉDÉ D'AFFICHAGE D'IMAGE EFFECTUÉ PAR UN DISPOSITIF COMPORTANT UN MIROIR COMMUTABLE ET LEDIT DISPOSITIF

(30) Priority: 26.09.2014 US 201462055973 P; 28.08.2015 KR 20150121829
(43) Date of publication of application: 02.08.2017
(73) Proprietor: Samsung Electronics Co., Ltd., Gyeonggi-do 16677 (KR)
(72) Inventor: KIM, Jong-ryool, Suwon-si Gyeonggi-do 16682 (KR); LEE, Won-suk, Seongnam-si Gyeonggi-do 13540 (KR); LIM, Hyung-jin, Seongnam-si Gyeonggi-do 13556 (KR)
(74) Representative: HGF Limited
(86) International application number: PCT/KR2015/010235
(87) International publication number: WO 2016/048102

(56) References cited:
- WO-A1-2013/180651
- KR-A- 20080 087 956
- US-A1- 2007 040 033
- US-A1- 2007 124 694
- US-A1- 2011 107 216
- US-A1- 2011 210 970
- US-A1- 2013 185 679
- US-A1- 2013 265 232
- US-A1- 2014 085 178
- US-A1- 2014 232 816

## Description

### Technical Field

The present disclosure relates to methods of displaying a user image reflected in a switchable mirror and an object, the methods being performed by a device including the switchable mirror, and to the device.

### Background Art

A switchable mirror may function as a mirror and as transparent glass according to a voltage applied. The switchable mirror may be referred to as switchable glass according to exemplary embodiments.

Research into various functions using the switchable mirror has been recently conducted. From this research, the necessity for a display device that reflects a user in a mirror and simultaneously displays information desired by the user using the switchable device has become increasingly evident.

A mirror is a daily used tool not only in a home but also in clothes shops, hair salons, etc. and functions as a mirror and simultaneously as a screen, and thus there is a need to develop various services that may be provided to the user through the mirror.

US-2014/085178-A1 relates to a mirror display with controllable information display areas. The mirror display includes a reflective viewer side to function as a mirror and an LCD device located on a non-viewer side to provide information display areas, which are viewable through the mirror display on the viewer side. A processor is electronically connected with the LCD device for controlling a position, such as the location and size, of the information display areas on the viewer side of the mirror. The position of the information display areas can be controlled via user input or a signal received from a sensor associated with the mirror.

US-2014/232816-A1 relates to a tele-immersive environment is described that provides interaction among participants of a tele-immersive session. The environment includes two or more set-ups, each associated with a participant. Each set-up, in turn, includes mirror functionality for presenting a three-dimensional virtual space for viewing by a local participant. The virtual space shows at least some of the participants as if the participants were physically present at a same location and looking into a mirror. The mirror functionality can be implemented as a combination of a semi-transparent mirror and a display device, or just a display device acting alone. According to another feature, the environment may present a virtual object in a manner that allows any of the participants of the tele-immersive session to interact with the virtual object.

WO-2013/180651-A1 relates to a display apparatus which includes a panel which is partial-transmissive and partial- reflective to visual light. A media source for providing visual contents is disposed at back side of the panel. A controller is coupled to the media source, and a detector is disposed adjacent to the panel and coupled to the controller. Upon receiving a first signal from the detector, the controller sets the apparatus to a first mode at which, the light level at the back side of the panel is above the threshold, and the visual contents are visible from a front side of the panel. Upon receiving a second signal from the detector, the controller sets the apparatus to a second mode at which, the light level in at least a predetermined area is below the threshold such that a reflected image of an object is visible from the front side of the panel in the predetermined area.

US-2011/210970-A1 relates to a digital mirror apparatus that can reduce the uncomfortable feeling that the user who works while watching the displayed image feels in the horizontal direction and that can reduce the stress on the user. The digital mirror apparatus for displaying an image of a user, which includes a posture identifying unit which determines whether or not an image to be displayed is to be an image of a back of the user, and to generate posture information indicating a result of the determination, an image generating unit which generates the image to be displayed by rendering three-dimensional model data of the user, and a display unit which displays the image generated by the image generating unit, and the image generating unit generates, as the image to be displayed, one of an image including a left-right reversed user image and an image including a left-right non-reversed user image, according to the posture information generated by the posture identifying unit.

### Disclosure of Invention

### Solution to Problem

Provided are one or more exemplary embodiments that display a user image reflected in a switchable mirror and an object.

### Brief Description of Drawings

These and/or other aspects will become apparent and more readily appreciated from the following description of the exemplary embodiments, taken in conjunction with the accompanying drawings in which:
FIG. 1 is a diagram for describing a method by which a device displays an image on a switchable mirror, according to an exemplary embodiment;
FIG. 2 is a diagram of a recommendation system, according to an exemplary embodiment;
FIG. 3 is a diagram of a structure of a display of a device, according to an exemplary embodiment;
FIGS. 4A and 4B are diagrams for describing a method of operating a display of a device, according to an exemplary embodiment;
FIG. 5 is a flowchart of a method by which a device displays an image on a switchable mirror, according to an exemplary embodiment;
FIG. 6 is a flowchart of a method by which a device determines a location of a user image reflected in a display, according to an exemplary embodiment;
FIGS. 7A and 7B are diagrams for describing a method by which a device determines a location of a user image reflected in a switchable mirror, according to an exemplary embodiment;
FIG. 8 is a flowchart of a method by which a device determines a display location of an object in order to prevent a user image reflected in a display and the object from overlapping each other, according to an exemplary embodiment;
FIGS. 9A and 9B are diagrams for describing a method by which a device determines a display location of an object in order to prevent a user image reflected in a switchable mirror of a display and the object from overlapping each other, according to an exemplary embodiment;
FIG. 10 is a flowchart of a method by which a device determines a display location of an object based on a location of a user's eyes in a user image reflected in a switchable mirror of a display, according to an exemplary embodiment;
FIG. 11A and 11B are diagrams for describing a method by which a device determines a display location of an object based on a location of a user's eyes in a user image reflected in a switchable mirror of a display, according to an exemplary embodiment;
FIG. 12 is a flowchart of a method by which a device reverses a moving image left and right based on a shape of a user image reflected in a display, according to an exemplary embodiment;
FIGS. 13A and 13B are diagrams for describing a method by which a device reverses a moving image left and right based on a shape of a user image reflected in a display, according to an exemplary embodiment;
FIG. 14 is a flowchart of a method by which a device determines a display location of an image in order to overlap a part of a user image reflected in a display corresponding to a preset part of a body and an object, according to an exemplary embodiment;
FIG. 15 is a diagram for describing a method by which a device determines a display location of an image in order to overlap a part of a user image reflected in a display corresponding to a preset part of a body and an object, according to an exemplary embodiment;
FIG. 16 is a flowchart of a method by which a device determines at least one of a size and a resolution of an object based on a distance from a display to a user, according to an exemplary embodiment;
FIGS. 17 through 18B are diagrams for describing a method by which a device determines a size of an object based on a distance from a display to a user, according to an exemplary embodiment;
FIG. 19 is a flowchart of a method by which a device determines a display location of an object based on a user input, according to an exemplary embodiment;
FIG. 20 is a flowchart of a method by which a device determines a display location of an object based on a user input, according to another exemplary embodiment;
FIG. 21 is a diagram for describing a method by which a device receives a user touch input that touches a switchable mirror, according to an exemplary embodiment;
FIG. 22 is a flowchart of a method by which a recommendation system recommends to a user one or more answers to a user question, according to an exemplary embodiment;
FIGS. 23A and 23B are diagrams for describing a method by which a recommendation system recommends to a user one or more answers to a user question, according to an exemplary embodiment;
FIG. 24A is a diagram for describing a method by which a recommendation system recommends to a user one or more answers to a user question, according to another exemplary embodiment;
FIG. 25 is a flowchart of a method by which a recommendation system obtains user information based on voice data of a user or a face image, according to an exemplary embodiment;
FIG. 26 is a diagram for describing a method by which a recommendation system recommends an item based on a recommendation system use history of a user who is not registered, according to an exemplary embodiment;
FIG. 27 is a flowchart of a method by which a recommendation system determines a user tendency based on user information, according to an exemplary embodiment;
FIG. 28 is a diagram for describing a method by which a recommendation system determines user attributes based on user information, according to an exemplary embodiment;
FIGS. 29A and 29B illustrate tendencies that may be directed by stylists and values of user attributes with respect to the respective tendencies;
FIG. 30 is a flowchart of a method by which a recommendation system determines a user tendency based on a demographic characteristic, according to an exemplary embodiment;
FIG. 31 is a diagram for describing a method by which a device displays a recommendation item, according to an exemplary embodiment;
FIG. 32 is a block diagram of a recommendation system, according to an exemplary embodiment;
FIGS. 33A and 33B illustrate a recommendation system, according to an exemplary embodiment;
FIG. 34 is a diagram for describing a method by which a recommendation system dynamically provides lecture materials in response to a user request during a video lecture, according to an exemplary embodiment;
FIG. 35 is a diagram for describing a method by which a device monitors a home environment state or a health condition of a user and provides a monitoring result, according to an exemplary embodiment;
FIG. 36 is a block diagram of a device, according to an exemplary embodiment; and
FIG. 37 is a block diagram of a device, according to another exemplary embodiment.

### Best Mode for Carrying out the Invention

Provided are one or more exemplary embodiments that display a user image reflected in a switchable mirror and an object.

The present invention provides a device according to claim 1, a respective method according to claim 4, and a computer-readable recording medium according to claim 7. Further aspects of the invention are outlined in the dependent claims. Embodiments which do not fall within the scope of the claims do not describe part of the present invention.

Additional aspects will be set forth in part in the description which follows and, in part, will be apparent from the description, or may be learned by practice of the presented exemplary embodiments.

### Mode for the Invention

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects of the present description. As used herein, expressions such as "at least one of," when preceding a list of elements, modify the entire list of elements and do not modify the individual elements of the list.

Terms used herein will be briefly described, and exemplary embodiments will be described in detail below.

General and widely-used terms have been employed herein, in consideration of functions provided in the exemplary embodiments, and may vary according to an intention of one of ordinary skill in the art, a precedent, or emergence of new technologies. Additionally, in some cases, an applicant may arbitrarily select specific terms. Then, the applicant will provide the meaning of the terms in the description of exemplary embodiments. Accordingly, it will be understood that the terms, used herein, should be interpreted as having a meaning that is consistent with their meaning in the context of the relevant art and will not be interpreted in an idealized or overly formal sense unless expressly so defined herein.

It will be further understood that the terms "comprises," "comprising," "includes," and/or "including," when used herein, specify the presence of components, but do not preclude the presence or addition of one or more other components, unless otherwise specified. Additionally, terms used herein, such as 'unit' or 'module', mean entities for processing at least one function or operation. These entities may be implemented by hardware, software, or a combination of hardware and software.

The exemplary embodiments will now be described more fully with reference to the accompanying drawings. The exemplary embodiments may, however, be embodied in many different forms and should not be construed as being limited to the embodiments set forth herein. In the description of the exemplary embodiments, certain detailed explanations of the related art are omitted when it is deemed that they may unnecessarily obscure the essence of the exemplary embodiments. Like numbers refer to like elements throughout the description of the figures.

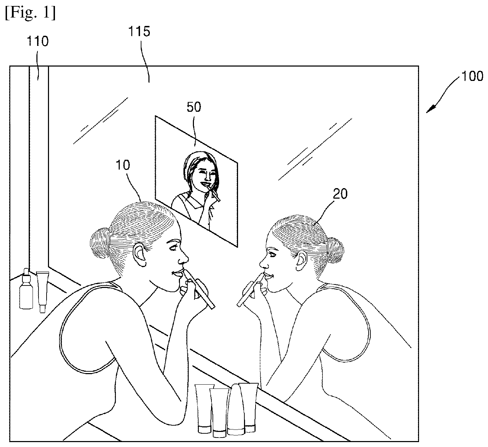

FIG. 1 is a diagram for describing a method by which a device 100 displays an image on a switchable mirror 115, according to an exemplary embodiment.

Referring to FIG. 1, the device 100 may include a display 110 including the switchable mirror 115.

The display 110 may operate the switchable mirror 115 as a mirror reflecting a user 10 and as a display screen that displays information according to an input of the user 10. The display 110 may simultaneously operate the switchable mirror 115 as a mirror and the display screen. The display 110 may operate a region of the switchable mirror 115 as the mirror and another region as the display screen.

The device 100 may display an object 50 on a region of the switchable mirror 115. The object 50 may include text, an image, a moving image, etc. but is not limited thereto. As shown in FIG. 1, when a user 10 who, for example, puts on makeup while seeing the switchable mirror 115 requests a moving image for makeup, the device 100 may reproduce the requested moving image on the region of the switchable mirror 115.

In this case, the device 100 may determine a location of a user image 20 reflected in the switchable mirror 115 and change a display location of the object 50 according to the determined location of the user image 20.

For example, when the object 50 is a moving image, the device 100 may change the display location of the moving image such that the user image 20 reflected in the switchable mirror 115 and the moving image do not overlap each other. When the object 50 displayed on the region of the switchable mirror 115 is, for example, a clothing image, the device 100 may change the display location of the clothing image such that a partial body region of the user image 20 reflected in the switchable mirror 115 and the clothing image overlap each other. The device 100 may change the display location of the object 50 based on a location of eyes of the user 10 in the user image 20 reflected in the switchable mirror 115.

The device 100 may change at least one of a size and resolution of the object 50 based on a distance from the switchable mirror 115 to the user 10. When the object 50 is a moving image indicating a motion that the user 10 is able to follow, the device 100 may flip the moving image horizontally so that the left and right of the user image 20 reflected in the switchable mirror 115 and the left and right of a person included in the moving image displayed on the switchable mirror 115 may be the same.

When a user input that selects the object 50 displayed on the switchable mirror 115 and moves the selected object 50 is received, the device 100 may change the display location of the object 50 based on the user input.

The device 100 may receive a question from a user and display an answer to the received question. For example, the device 100 may request the answer to the received question from a server, receive the object 50 indicating the requested answer from the server, and display the received object 50 on the region of the switchable mirror 115.

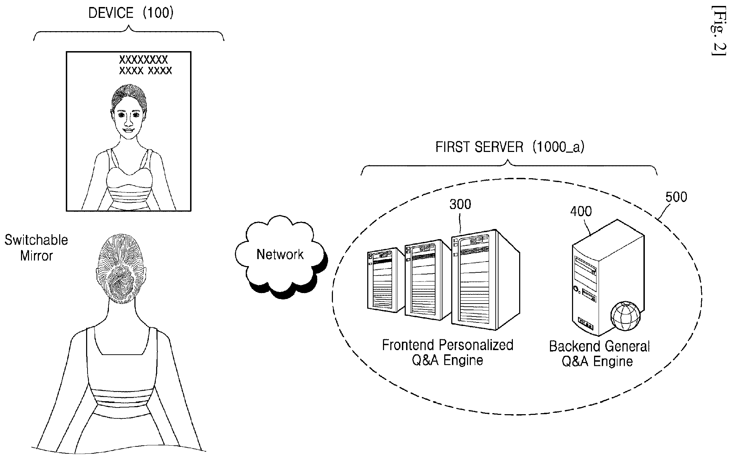

FIG. 2 is a diagram of a recommendation system 2000, according to an exemplary embodiment.

Referring to FIG. 2, the recommendation system 2000 may include the device 100 and a first server 1000_a including a Q&A engine 500.

The device 100 may receive a question from a user and request an answer to the received question from the first server 1000_a. The first server 1000_a may analyze meaning of the received question and determine at least one answer to the question based on the analyzed meaning. When the at least one answer to the question is determined, the first server 1000_a may transmit the at least one answer to the question to the device 100. The device 100 may provide the at least one answer to the question received from the first server 1000_a to the user.

In this case, the first server 1000_a may include a frontend personalized Q&A engine 300 and a backend general Q&A engine 400.

The personalized Q&A engine 300 may correct the question received from the device 100 to a question more appropriate to the user based on user information and determine an answer to the corrected question using the general Q&A engine 400. For example, when a request "I want to look beautiful" is received from the device 100, the personalized Q&A engine 300 may correct the question to "I want to look nice" or "I want to look sexy" according to the user based on the user information.

The personalized Q&A engine 300 may request the answer to the corrected question from the general Q&A engine 400. The general Q&A engine 400 may generate the answer to the question and transmit the answer to the personalized Q&A engine 300. When the answer to the question is received from the general Q&A engine 400, the personalized Q&A engine 300 may transmit the received answer to the device 100.

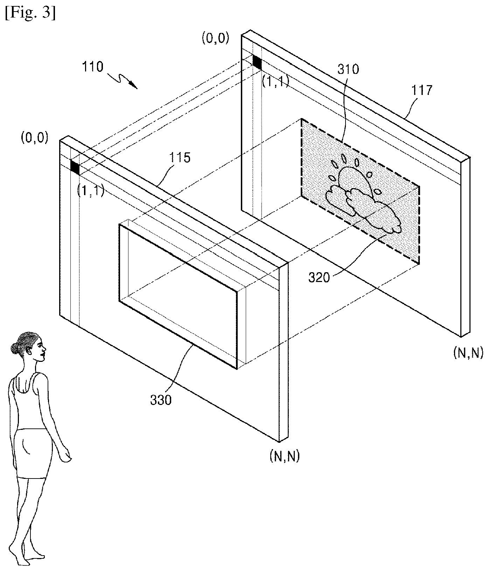

FIG. 3 is a diagram of a structure of the display 110 of the device 100, according to an exemplary embodiment.

The display 110 of the device 100 may include the switchable mirror 115 and a display device 117.

The switchable mirror 115 may operate as a mirror reflecting most light that is incident thereon according to a voltage applied. When the switchable mirror 115 operates as the mirror, the user may not see an object 320 displayed on a screen of the display device 117 and may see only a user's own image reflected in the switchable mirror 115.

The switchable mirror 115 may transmit most of the light that is incident thereon according to the voltage applied. When the switchable mirror 115 operates as glass, although the user may not see the user's own image through the switchable mirror 115, the user may see the object 320 displayed on the screen of the display apparatus 117.

The switchable mirror 115 may control and vary a transmission amount of the light that is incident thereon according to the voltage applied. In this case, the switchable mirror 115 may operate as translucent glass. When the switchable mirror 115 operates as the translucent glass, the user may see not only the user's own image reflected in the switchable mirror 115 but also the object 320 displayed on the screen of the display device 117.

The display 110 may allow the transmission of differing amounts of light for different regions of the switchable mirror 115. Accordingly, the display 110 may control the switchable mirror 115 to set a region of the switchable mirror 115 as a region displaying the object 320 and operate another region thereof as the mirror.

For example, the display 110 may determine a region of the switchable mirror 115 corresponding to a location of a first pixel of the display device 117 as a region of a first pixel of the switchable mirror 115. Accordingly, when the display 110 controls the switchable mirror 115 to display the object 320 only on a first region 330 of the switchable mirror 115 and operate the other region thereof as a mirror, the display 110 may display the object 320 on the first region 310 of the display device 117 and operate the first region 330 of the switchable mirror 115 as transparent glass and the other region thereof as the mirror.

In some exemplary embodiments, the switchable mirror 115 may be a selectively transparent screen located between the display 117 and a user. The selectively transparent screen may be configured to selectively provide a transparent portion and a reflective portion. In an exemplary embodiment, the display includes multiple layers, including the selectively transparent screen layered in front of the display, so that the selectively transparent screen is between the display and the user.

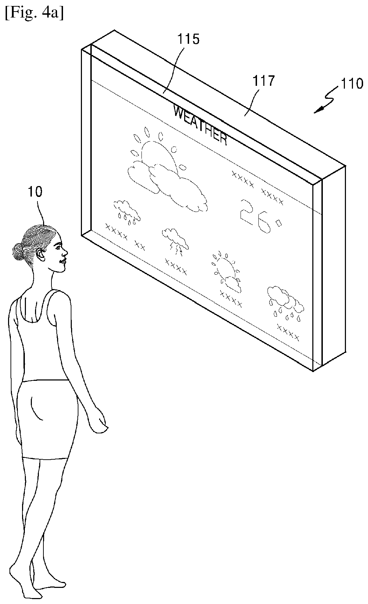

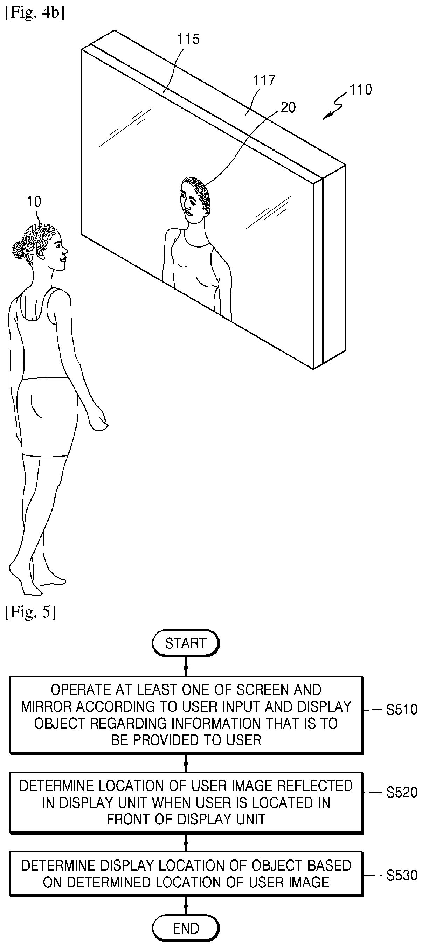

FIGS. 4A and 4B are diagrams for describing a method of operating the display 110 of the device 100, according to an exemplary embodiment.

Referring to FIG. 4A, the display 110 may operate as a screen.

When the display 110 operates as the screen, since the switchable mirror 115 operates as transparent glass, the user 10 may see an object displayed by the display device 117.

Referring to FIG. 4B, the display 110 may operates as a mirror.

When the display 110 operates as the mirror, the user 10 may see only the user image 20 reflected in the switchable mirror 115 and may not see an object displayed by the display device 117.

Although not shown in FIGS. 4A and 4B, the display 110 may simultaneously operate as the mirror and the screen. In this case, the user may see the user image 20 overlaid or overlapped with the object.

FIG. 5 is a flowchart of a method by which the device 100 displays an image on a switchable mirror, according to an exemplary embodiment.

In operation S510, the device 100 may operate at least one of a screen and a mirror according to a user input and display an object regarding information that is to be provided to a user.

The object may include text, images, and moving images but is not limited thereto.

In operation S520, the device 100 may determine a location of a user image reflected in a display when the user is located in front of the display.

The device 100 may determine the location of the user image reflected in a switchable mirror of the display. For example, the device 100 may determine the location of the user image in relation to a preset pixel coordinate in the switchable mirror.

In operation S530, the device 100 may determine a display location of the object based on the determined location of the user image.

The device 100 may determine the display location of the object such that the user image reflected in the display and the object do not overlap each other. The device 100 may determine a display location of the object such that a part of the user image corresponding to a predetermined body part and the object overlap each other. The device 100 may determine the display location of the object based on locations of user's eyes of the user image reflected in the display. The device 100 may determine a distance from the display to the user based on a size of the user image reflected in the display. The device 100 may determine the distance from the display to the user and determine at least one of a size and a resolution of the object based on the determined distance.

When the object is a moving image indicating a motion that the user is able to follow, the device 100 may flip the moving image horizontally according to a shape of the user image reflected in the display.

When the device 100 selects the object displayed on the display and receives a user input that moves the selected object, the device 100 may determine the display location of the object based on the user input.

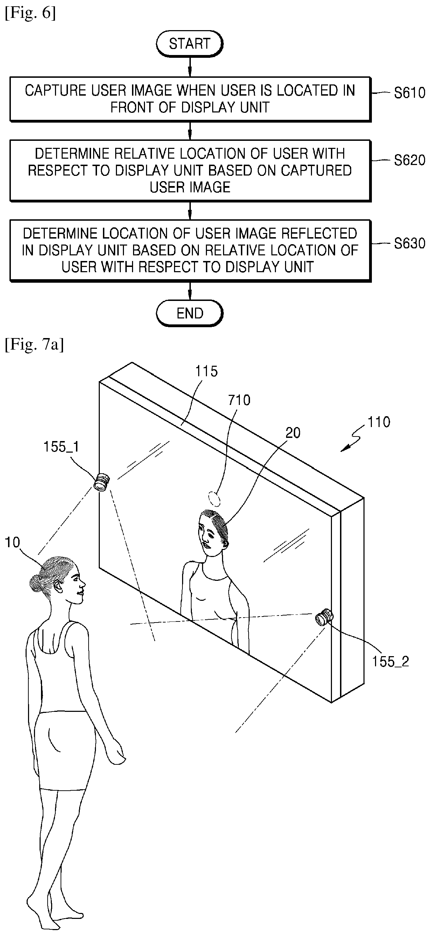

FIG. 6 is a flowchart of a method by which the device 100 determines a location of a user image reflected in a display, according to an exemplary embodiment.

In operation S610, the device 100 may capture a user image when the user is located in front of the display.

The device 100 may capture the user image when the device 100 recognizes that the user is located in front of the display.

In operation S620, the device 100 may determine a relative location of the user with respect to the display based on a captured user image.

The device 10 may be provided with algorithm for determining the relative location of the user with respect to a switchable mirror of the display based on a location of the user in the captured user image. The relative location of the user with respect to the switchable mirror may be presented as a preset pixel coordinate in the switchable mirror.

In operation S630, the device 100 may determine a location of the user image reflected in the display based on the relative location of the user with respect to the display.

The device 100 may present the location of the user image reflected in the display as the preset pixel coordinate in the switchable mirror based on the relative location of the user with respect to the switchable mirror.

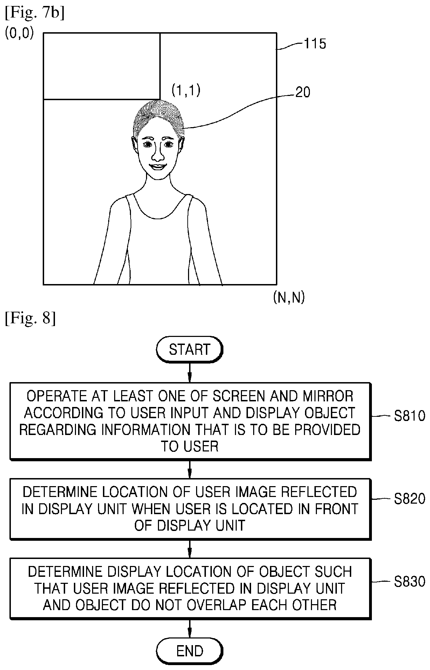

FIGS. 7A and 7B are diagrams for describing a method by which the device 100 determines a location of a user image reflected in a switchable mirror, according to an exemplary embodiment.

Referring to FIG. 7A, the device 100 may capture the user 10 located in front of the switchable mirror 115 and determine a location of the user 10 with respect to the switchable mirror 115 based on a captured image of the user 10.

The device 100 may include at least one camera for capturing the user 10. The at least one camera may be fixed toward the user 10 that is to be located in front of a mirror. The at least one camera may be fixed to the display 110 and may be fixed to a wall to which the display 110 is attached. According to an exemplary embodiment, a camera may be provided in a center 710 of the switchable mirror 115 in a direction looking toward the user 10. According to another exemplary embodiment, the camera may be provided in front of the switchable mirror 115 in a direction looking toward the switchable mirror 115. According to yet another exemplary embodiment, an image captured by smart glasses worn by user 10 may be received from the smart glasses.

The device 100 may determine a relative location of the user 10 with respect to the switchable mirror 115 based on a location of the user 10 in the captured image of the camera. For example, when the user 10 is captured by a camera 155_1 attached to the left side of the display 110 and a camera 155_2 attached to the right side of the display 110 in FIG. 7A, the device 100 may obtain two images captured in different directions. The device 100 may determine the relative location of the user 10 with respect to the switchable mirror 115 based on locations of the cameras 155_1 and 155_2, a capture direction, and the location of the user in the captured image. The device 100 may determine the relative location of the user 10 with respect to the switchable mirror 115, in consideration of the location of the user 10 in the two images captured in different directions.

The relative location of the user 10 with respect to the switchable mirror 115 may mean how far a center of the user 10 is to the left or right from the center 710 of the switchable mirror 115, how far a head of the user 10 is above or below the center 710 of the switchable mirror 115, how far the user 10 is from a surface of the switchable mirror 115, or a direction and an angle in which the user 10 rotates in relation to the surface of the switchable mirror 115.

Referring to FIG. 7B, the device 100 may determine a location of the user image 20 reflected in the switchable mirror 115 based on the determined relative location of the user 10 with respect to the switchable mirror 115. For example, the device 100 may store a calculation equation for determining the location and a shape of the user image 20 reflected in the switchable mirror 115 according to the relative location of the user 10 with respect to the switchable mirror 115.

The device 100 may determine the location of the user image 20 in relation to an N*N pixel coordinate having a left top end of the switchable mirror 115 as an original point and a right bottom end thereof as an end point. For example, the device 100 may determine a location of a top of a head in the user image 20 reflected in the switchable mirror 115.

FIG. 8 is a flowchart of a method by which the device 100 determines a display location of an object in order to prevent a user image reflected in a display and the object from overlapping each other, according to an exemplary embodiment.

In operation S810, the device 100 may operate at least one of a screen and a mirror according to a user input and display the object regarding information that is to be provided to a user. In operation S820, the device 100 may determine a location of the user image reflected in the display since the user is located in front of the display.

In operation S830, the device 100 may determine the display location of the object such that the user image reflected in the display and the object do not overlap each other.

According to an exemplary embodiment, the device 100 may control a switchable mirror such that a region that displays the object operates as translucent glass from transparent glass without changing the display location of the object. In this case, the user may be reflected in the switchable mirror and simultaneously the object may be displayed.

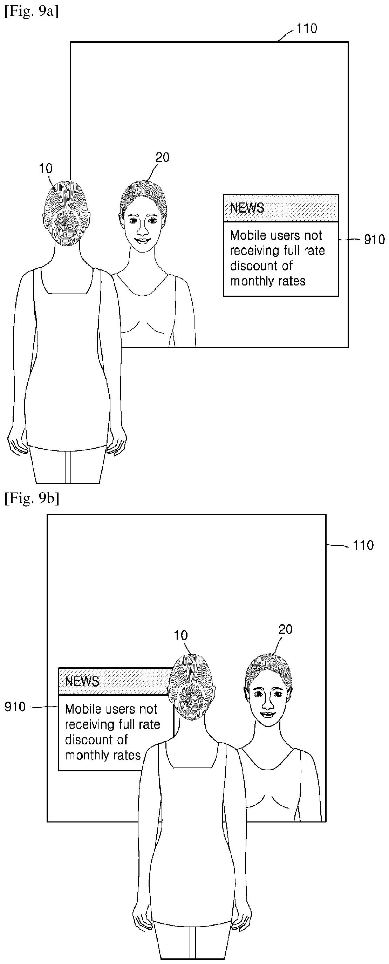

FIGS. 9A and 9B are diagrams for describing a method by which the device 100 determines a display location of an object 910 in order to prevent the user image 20 reflected in a switchable mirror of the display 110 and the object from overlapping each other, according to an exemplary embodiment.

Referring to FIG. 9A, the device 100 may determine a display location of an object 910 such that the user image 20 reflected in the switchable mirror of the display 110 and the object 910 do not overlap each other.

The device 100 may determine a location of the user image 20 reflected in the switchable mirror of the display 110. For example, the device 100 may determine a region on the switchable mirror in which the user image 20 is located as a coordinate of a pixel on the switchable mirror.

Since the location of the user image 20 reflected in the switchable mirror of the display 110 is determined, the device 100 may determine a size of the object 910 that is to be displayed on the display 110. The device 100 may determine the display location of the object 910 such that the user image 20 reflected in the switchable mirror of the display 110 and the object 910 do not overlap each other based on the determined size of the object 910 and the coordinate of the region on the switchable mirror in which the user image 20 is located.

When the user 10 moves from the left of the switchable mirror to the right, the user image 20 reflected in the switchable mirror may move from the left of the switchable mirror to the right. Accordingly, the user image 20 reflected in the switchable mirror may overlap with the displayed objet 910.

When a region of the switchable mirror on which the object 910 is displayed operates as transparent glass, the user image 20 may not appear in a region that displays the object 910. Thus, in this case, the user 10 may need to move again in order to see a user's own image.

Referring to FIG. 9B, the device 100 may change the display location of the object 910 such that the user image 20 reflected in the switchable mirror of the display 110 and the object 910 do not overlap each other.

When the user 10 moves from the left of the switchable mirror to the right, the display location of the object 910 may be changed from the right of the switchable mirror to the left such that the user image 20 reflected in the switchable mirror and the object 910 do not overlap each other.

In some exemplary embodiments, the device 100 may change a size of the object 910 such that the user image 20 reflected in the switchable mirror and the object 910 do not overlap each other. For example, when the user 10 moves from the left of the switchable mirror to the right, the device 100 may reduce the size of the object 910 so that the user image 20 reflected in the switchable mirror and the object 910 do not overlap each other.

The device 100 may change a shape of the object 910 such that the user image 20 reflected in the switchable mirror and the object 910 do not overlap each other. For example, when the user 10 moves from the left of the switchable mirror to the right, the device 100 may change the shape of the object 910 to a vertically long rectangle so that the user image 20 reflected in the switchable mirror and the object 910 do not overlap each other.

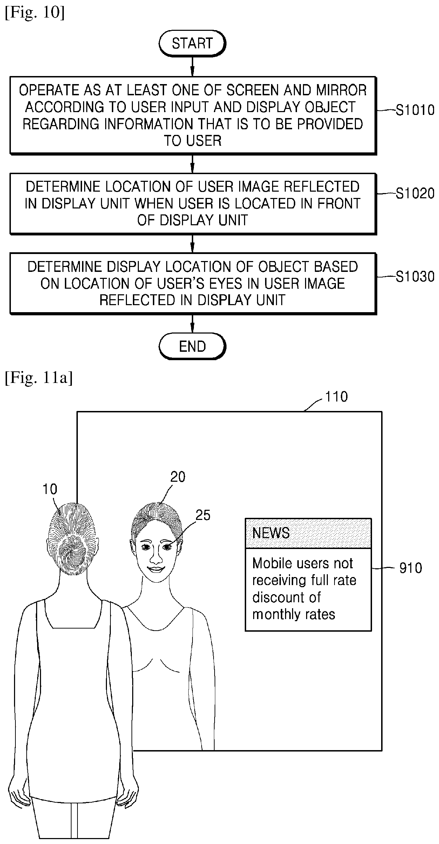

FIG. 10 is a flowchart of a method by which the device 100 determines a display location of an object based on a location of user's eyes in a user image reflected in a switchable mirror of a display, according to an exemplary embodiment.

In operation S1010, the device 100 may operate as at least one of a screen and a mirror according to a user input and display an object regarding information that is to be provided to a user. In operation S1020, the device 100 may determine a location of a user image reflected in the display when the user is located in front of the display.

In operation S1030, the device 100 may determine the display location of the object based on the location of the user's eyes in the user image reflected in the display.

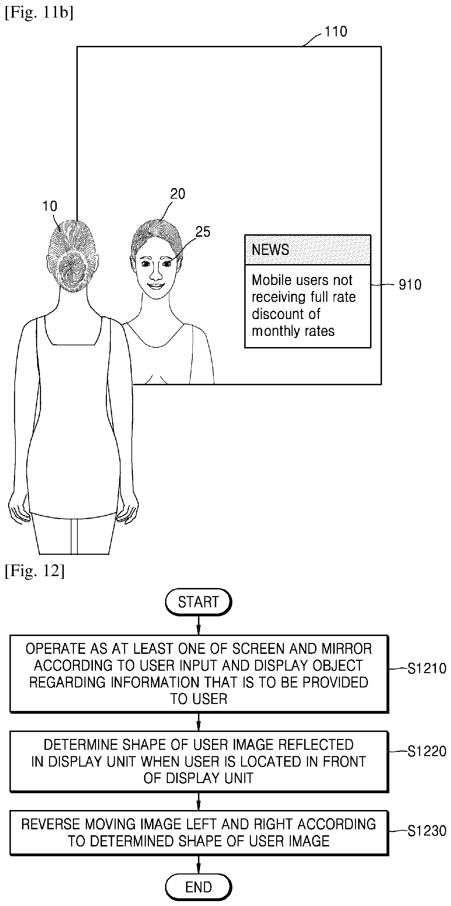

FIG. 11A and 11B are diagrams for describing a method by which the device 100 determines a display location of the object 910 based on a location 25 of user's eyes in the user image 20 reflected in a switchable mirror of the display 110, according to an exemplary embodiment.

Referring to FIG. 11A, the device 100 may determine a display location of the object 910 based on the location 25 of the user's eyes in the user image 20 reflected in the switchable mirror of the display 110.

The device 100 may determine the location 25 of the user's eyes in the user image 20 reflected in the switchable mirror. For example, the device 100 may determine a location of a face region of the user 10 in the user image 20 reflected in the switchable mirror using a face recognition algorithm and determine a location of an eye region of the user 10 in the face region of the user 10.

The device 100 may determine a height of the object 910 in accordance with a height of the eyes of the user 10. For example, the device 100 may determine the height of the object 910 such that a center of the object 910 is located at the same height as the height of the eyes of the user 10.

Referring to FIG. 11B, when the location 25 of the user's eyes is changed, the device 100 may change a display location of the object 910 based on the changed location 25 of the user's eyes.

When the user 10 sits down on a chair, the location 25 of the eyes of the user 10 may move down. When the location 25 of the eyes of the user 10 moves down, the device 100 may move a location of the object 910 down such that the height of the object 910 is the same as that of the eyes of the user 10.

In some exemplary embodiments, when the location 25 of the eyes of the user 10 moves from right to left in the switchable mirror, the device 100 may move the location of the object 910 right or left in the same manner as a moving direction of the eyes of the user 10.

FIG. 12 is a flowchart of a method by which the device 100 flips a moving image horizontally based on a shape of a user image reflected in a display, according to an exemplary embodiment.

In operation S1210, the device 100 may operate as at least one of a screen and a mirror according to a user input and display an object regarding information that is to be provided to a user. In operation S1220, the device 100 may determine the shape of the user image reflected in the display when the user is located in front of the display.

In operation S1230, the device 100 may flip the moving image horizontally according to the determined shape of the user image.

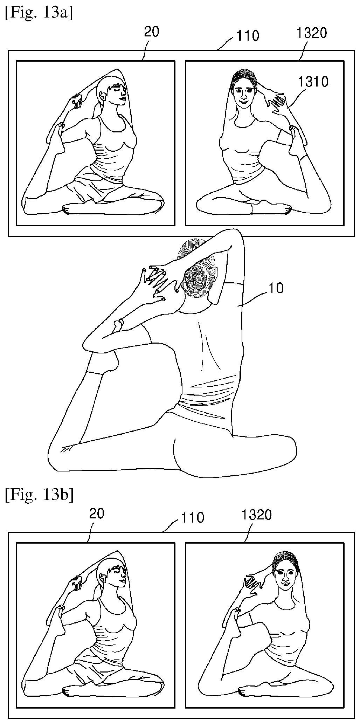

FIGS. 13A and 13B are diagrams for describing a method by which the device 100 flips a moving image 1320 horizontally based on a shape of the user image 20 reflected in the display 110, according to an exemplary embodiment.

Referring to FIGS. 13A and 13B, the device 100 may flip the moving image 1320 horizontally according to the shape of the user image 20 reflected in a switchable mirror of the display 110.

For example, an object may be the moving image 1320 indicating a motion that the user 10 is able to follow. A motion of a right arm or a right hand of a demonstrator 1310 may be different from a motion of a left arm or a left hand in the moving image 1320. In this regard, in the moving image 1320 of the demonstrator 1310 demonstrating while looking toward the user 10, a user 10 may have a different style of following the demonstrator 1310. For example, some users may follow right and left motions of the demonstrator 1310 in the same way, and other users may follow the right motion of the demonstrator 1310 as the left motion and the left motion of the demonstrator 1310 as the right motion.

As shown in FIG. 13A, when the user 10 follows the right and left motions of the demonstrator 1310 in the same way, a motion image of the user 10 reflected in the switchable mirror may be horizontally opposite to (a mirror image of) an operation image of the demonstrator 1310 displayed in the switchable mirror. In this regard, when the user 10 simultaneously sees the user image 20 and an image of the displayed moving image 1320, the user 10 may have a difficulty in distinguishing the right and left motions.

Referring to FIG. 13B, the device 100 may compare a shape of the user image 20 reflected in the switchable mirror and a shape of the displayed demonstrator 1310 and flip the image of the demonstrator 1310 horizontally so that left and right motions of the user image 20 reflected in the switchable mirror and left and right motions of the displayed demonstrator 1310 are the same.

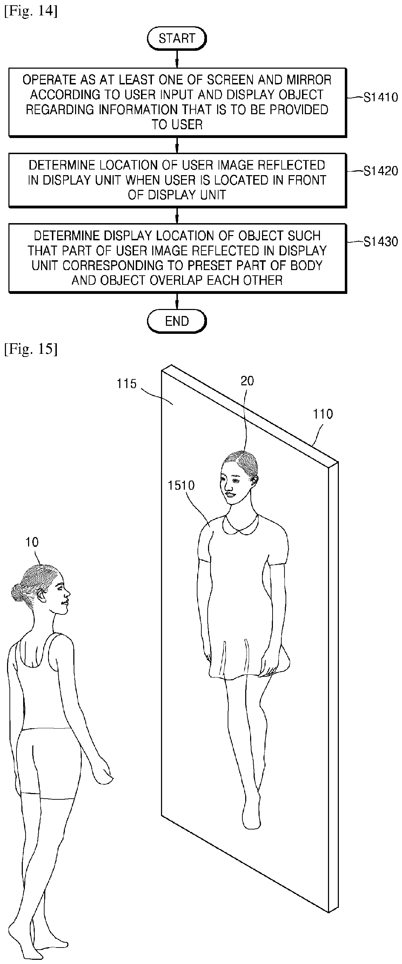

FIG. 14 is a flowchart of a method by which the device 100 determines a display location of an image in order to overlap a part of a user image reflected in a display corresponding to a preset part of a body and an object, according to an exemplary embodiment.

In operation S1410, the device 100 may operate as at least one of a screen and a mirror according to a user input and display the object regarding information that is to be provided to a user. In operation S1420, the device 100 may determine a location of the user image reflected in the display when the user is located in front of the display.

In operation S1430, the device 100 may determine a display location of the object such that the part of the user image reflected in the display corresponding to the preset part of the body and the object overlap each other.

When the display location of the object is determined, the device 100 may change a region of a switchable mirror that is to display the object to a transparent or translucent region and display the object in the changed region so that the object may be displayed in a partial region of the user image, and may therefore partially overlap with the user image.

FIG. 15 is a diagram for describing a method by which the device 100 determines a display location of an image in order to overlap a part of the user image 20 reflected in the display 110 corresponding to a preset part of a body and an object, according to an exemplary embodiment.

Referring to FIG. 15, the device 100 may determine the display location of the image such that the part of the user image 20 reflected in the display 110 corresponding to the preset part of the body and the object may overlap each other.

For example, although the user 10 does not actually wear a certain piece of clothing, the device 100 may display the piece of clothing on a preset region of the user image 20 reflected in the switchable mirror 115, thereby providing a service of allowing the user to virtually wear the piece of clothing.

The device 100 may receive a user input that selects the clothes. The device 100 may determine a type of the selected clothes and determine a region of the body corresponding to the determined type of the clothes. The region of the body corresponding to the type of the clothes may be determined in the device 100. For example, in the case of a shirt, a region of a trunk and arm of the user 10 may be determined, and in the case of a dress, a region of the user 10 from a neck to thighs may be determined.

The device 100 may determine a location of a region of the user image 20 reflected in the switchable mirror 115 corresponding to the clothes selected by the user 10. For example, as shown in FIG. 15, when the piece of clothing selected by the user 10 is a dress 1510, the device 100 may determine a location of a region of the neck and thighs of the user 10 in the user image 20 reflected in the switchable mirror 115 and determine a display location of the selected dress 1510 so that the selected dress 1510 is displayed in the region from the neck to the thighs of the user 10.

In this case, the device 100 may obtain information regarding an actual body size of the user 10 and a size of the dress 1510 and determine the display location of the dress 1510 so that the user 10 appears the same as a state in which the user 10 actually wears the dress 1510 based on the obtained actual body size of the user 10 and size of the dress 1510.

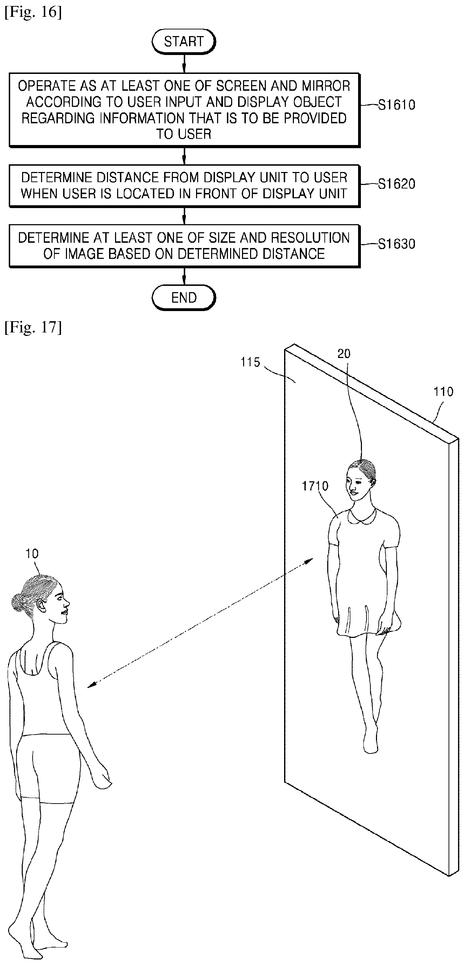

FIG. 16 is a flowchart of a method by which the device 100 determines at least one of a size and a resolution of an object based on a distance from a display to a user, according to an exemplary embodiment.

In operation S1610, the device 100 may operate as at least one of a screen and a mirror according to a user input and display the object regarding information that is to be provided to the user. In operation S1620, the device 100 may determine the distance from the display to the user since the user is located in front of the display.

In operation S1630, the device 100 may determine at least one of the size and the resolution of the object based on the determined distance.

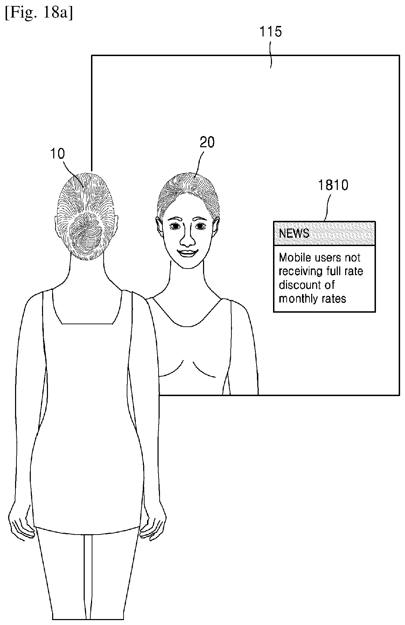

FIGS. 17 and 18A-18B are diagrams for describing a method by which the device 100 determines a size of an object based on a distance from the display 110 to the user 10, according to an exemplary embodiment.

Referring to FIGS. 17 and 18A-18B, the device 100 may determine the size of the object based on the distance from the display 110 to the user 10.

For example, as shown in FIG. 17, while clothing 1710 is displayed on a preset region of the user image 20 reflected in the switchable mirror 115, when a size of the user 10 is changed, a size of the displayed clothing 1710 may be changed in accordance with the changed size of the user 10. For example, when the user 10 moves away from a surface of the switchable mirror 115, the device 100 may reduce the size of the displayed clothing 1710, and when the user 10 moves closer to the surface of the switchable mirror 115, the device 100 may increase the size of the displayed clothing 1710.

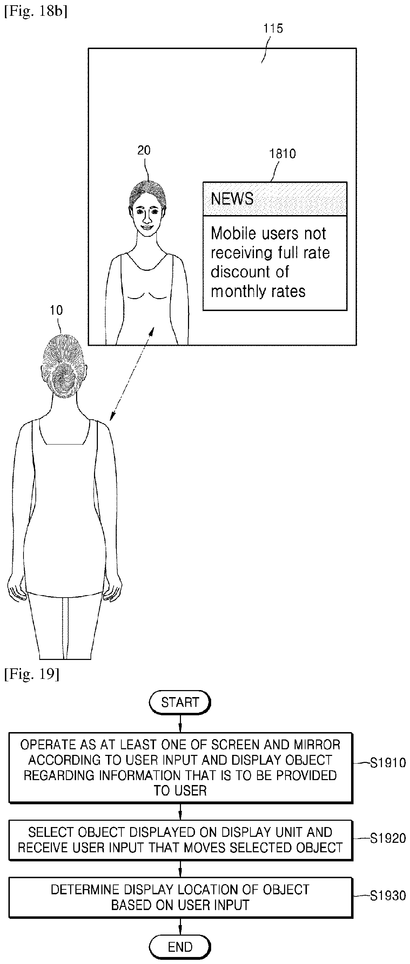

For example, as shown in FIG. 18A, when the user 10 moves closer to the surface of the switchable mirror 115, the device 100 may reduce a size of displayed text 1810, and, as shown in FIG. 18B, when the user 10 moves away from the surface of the switchable mirror 115, the device 100 may increase the size of the displayed text 1810.

Although not shown in FIGS. 17 and 18A 18B, the device 100 may determine a resolution of the object based on the distance from the display 110 to the user 10.

For example, while the display 110 displays a streamed moving image, when the user 10 moves away from the surface of the switchable mirror 115, the device 100 may reduce a resolution of a streamed image, and, when the user 10 moves closer to the surface of the switchable mirror 115, the device 100 may increase the resolution of the streamed image.

In some exemplary embodiments, the resolution may mean the number of pieces of data used to express a single object. If an image expressing the same object has a high resolution, the image may be expressed using more pieces of data.

FIG. 19 is a flowchart of a method by which the device 100 determines a display location of an object based on a user input, according to an exemplary embodiment.

In operation S1910, the device 100 may operate as at least one of a screen and a mirror according to the user input and display the object regarding information that is to be provided to a user. In operation S1920, the device 100 may select the object displayed on a display and receive the user input that moves the selected object.

In operation S1930, the device 100 may determine the display location of the object based on the user input.

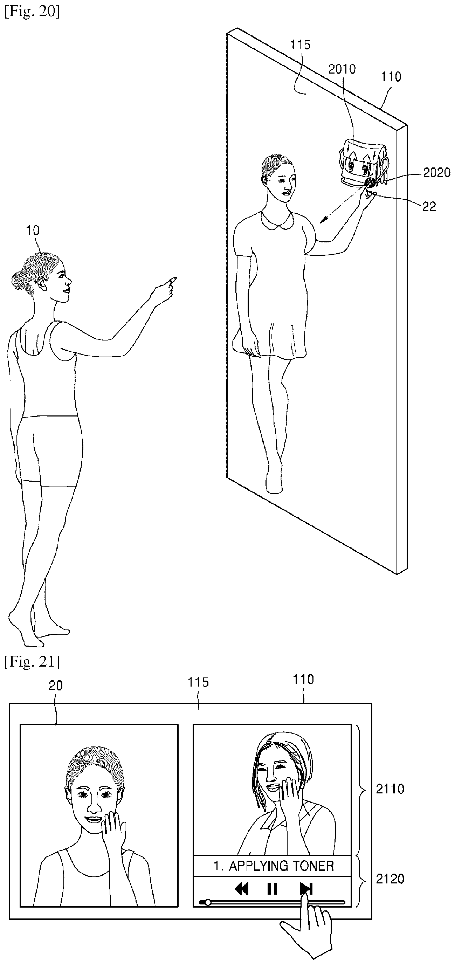

FIG. 20 is a flowchart of a method by which the device 100 determines a display location of an object 2010 based on a user input, according to another exemplary embodiment.

Referring to FIG. 20, the device 100 may select the displayed object 2010 and receive the user input that moves the selected object 2010.

For example, the device 10 may determine a relative location of a hand of a user with respect to the switchable mirror 115 using a camera included in the device 100 and determine whether a hand image 22 reflected in the switchable mirror 115 is located within a previously determined distance from the display object 2010.

When the hand image 22 reflected in the switchable mirror 115 is located within the previously determined distance from the display object 2010, the device 100 may determine that the user selects the display object 2010 and display, on the display 110, an indicator 2020 indicating that the object 2010 is selected.

FIG. 21 is a diagram for describing a method by which the device 100 receives a user touch input that touches the switchable mirror 115, according to an exemplary embodiment.

Referring to FIG. 21, the device 100 may include a touch panel before or after, or in front of or behind, the switchable mirror 115. Accordingly, the display 110 may operate as a touch screen.

The device 100 may display a moving image 2110 and a user interface 2120 including a plurality of buttons for controlling the moving image 2110 on the display 110. When a user input that touches a region displaying a fast forward button among the plurality of buttons is received, the device 100 may determine a location of the touched region and fast forward and reproduce the moving image 2110.

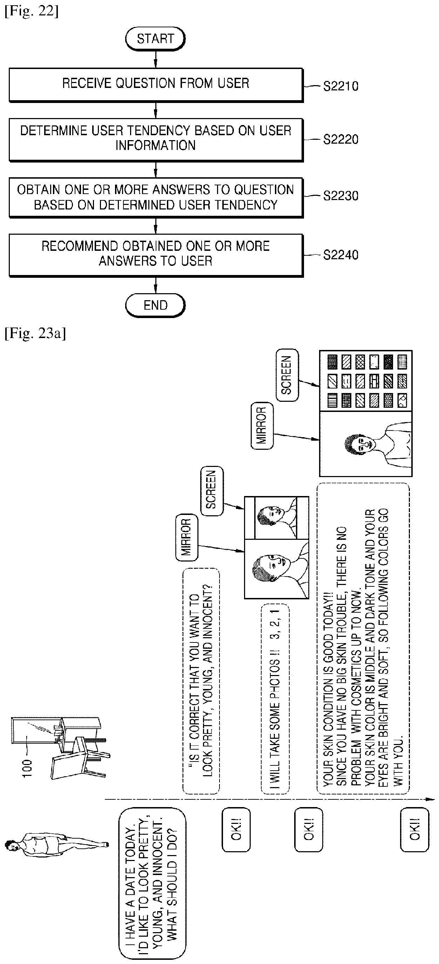

FIG. 22 is a flowchart of a method by which a recommendation system 2000 recommends to a user one or more answers to a user question, according to an exemplary embodiment.

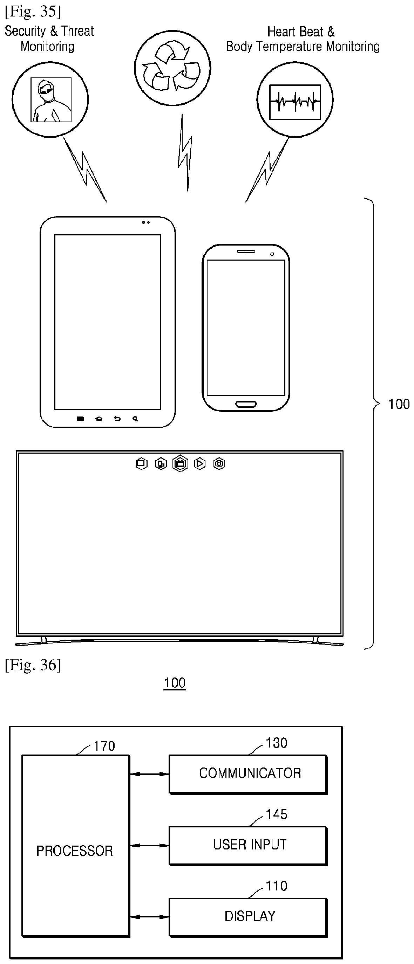

The recommendation system 2000 may include the device 100 including a display and the first server 100_a as shown in FIG. 2 and may include the device 100 including the display, a second server 1000_b in which the personalized Q&A engine 300 is implemented, and a third server 1000_c in which the general Q&A engine 400 is implemented as shown in FIG. 35A, and described in further detail below. The recommendation system 2000 may include the device 100 in which the display 110 and the personalized Q&A engine 300 are implemented, and the third server 1000_c in which the general Q&A engine 400 is implemented as shown in FIG. 35B, and described in further detail below.

In operation S2210, the recommendation system 2000 may receive a question from the user.

The recommendation system 2000 may be a personal recommendation system 2000 used at home or may be a recommendation system 2000 (for example, digital signage) for assisting a customer shopping in a store.

The recommendation system 2000 may determine whether to execute a recommendation service before receiving the question from the user.

For example, the recommendation system 2000 may start the recommendation service based on voice data received from the user. For example, when a characteristic of the received voice data is the same as the characteristic stored in the recommendation system 2000, the recommendation system 2000 may recognize that the user who has the question is a user set in the recommendation system 2000 and start the recommendation service. For example, a specific word may be stored as a trigger signal for starting a service in the recommendation system 2000. Accordingly, when the received voice data indicates the word stored as the trigger signal, the recommendation system 2000 may start the recommendation service.

For example, the recommendation system 2000 may start the recommendation service when receiving a user input that touches the display. In this case, the recommendation system 2000 may start the recommendation service when receiving the user input that touches a preset region in a touch recognizable region of the display. The recommendation system 2000 may start the recommendation service when receiving the user input that touches a preset button displayed on the display. According to an exemplary embodiment, the recommendation system 2000 may start the recommendation service when receiving the user input that involves pressing a preset physical button, rather than a touch input.

For example, the recommendation system 2000 may determine whether a thing that moves more than a preset distance is present by using an infrared sensor, and, when the thing that moves more than the preset distance is present, start the recommendation service. The recommendation system 200 may start the recommendation service by using the infrared sensor since the user is located within the preset distance from the recommendation system 200.

For example, the recommendation system 2000 may capture an image of a periphery of the recommendation system 2000 by using a camera, when a person's face is recognized in a captured image, and start the recommendation service. For example, the recommendation system 2000 may determine whether the person's face is present in the image captured by the camera based on a face recognition technology.

For example, when an eye direction in the captured image is a direction looking toward the recommendation system 2000, the recommendation system 2000 may start the recommendation service. The recommendation system 2000 may calculate a distance from the recommendation system 2000 to the user based on a size of a face in the captured image, and, when the distance from the recommendation system 2000 to the user is below a preset distance, start the recommendation service.

The recommendation system 2000 may directly recognize the face in the captured image, transmit the captured image to a preset server, and receive information about whether the face is present in the captured image, the eye direction, or the distance from the recommendation system 2000 to the user from the server. In this case, the recommendation system 2000 may extract a face region from the captured image according to a network status between the recommendation system 2000 and the server and transmit an image of the extracted face region to the server. The recommendation system 2000 may down-sample the captured image to reduce a size of the image according to the network status between the recommendation system 2000 and the server and transmit the image having the reduced size to the server.

The recommendation system 200 may receive the question from the user when the recommendation service starts. The recommendation system 2000 may include a user input device such as a microphone, a touch pad, etc. in order to receive the question from the user. The question may be received in the form of an interrogative question, a sentence in the form of an imperative sentence, a declarative sentence, or a word or a phrase.

In operation S2220, the device 100 may determine a user tendency based on user information.

When the recommendation service starts, the recommendation system 2000 may determine whether the user whose face is captured or who receives the voice data is a previously registered user in order to obtain the user information of the user.

For example, the recommendation system 2000 may determine whether a user's face is previously registered using a face recognition technology. For example, the recommendation system 2000 may extract a characteristic of the user's face in the captured image, and determine whether a captured user is the previously registered user based on whether the extracted characteristic is previously registered.

The recommendation system 2000 may determine whether user's voice is previously registered using a voice recognition technology. For example, the recommendation system 2000 may extract a characteristic of the user's voice from the received voice data and determine whether the user is the previously registered user based on whether the extracted characteristic is previously registered.

When the user is previously registered, the recommendation system 2000 may obtain the stored user information corresponding to the registered face or voice.

The recommendation system 2000 may provide a user interface for user registration. The user may input the user information via the user interface. The user information may include user account information and user personal information such as a user name, age, gender, race, address, Social Networking Server (SNS) account information, website information, a blog address, etc.

The user may capture an image of a user's own face for face recognition through the user interface and record voice for voice recognition. The recommendation system 2000 may store the user information in correspondence to the captured user's face and the recorded voice.

In some exemplary embodiments, even when the user does not intentionally register the user in the recommendation system 2000, the recommendation system 2000 may automatically capture the user's face, record the voice, and store the captured face or the recorded voice as user identification information.

In some exemplary embodiments, even when the user does not intentionally input the user information in the recommendation system 2000, the recommendation system 2000 may store user conversation content, a product purchase history, and a product recommendation history as the user information. The recommendation system 2000 may capture a user's appearance and obtain information regarding a user's gender, approximate age, race, etc. based on an appearance image of the captured user. The recommendation system 2000 may store user smile information as the user information.

Accordingly, even when the user does not intentionally register the user in the recommendation system 2000, the recommendation system 2000 may obtain a user visit time, a product list purchased by the user, a product list recommended by the user, etc. based on the user voice data and a user face image.

The recommendation system 2000 may obtain a web page address visited by the user based on the user identification information, crawl a web page visited by the user, and obtain user information stored in the web page. For example, the recommendation system 200 may obtain user SNS identification information and the user SNS account information based on the user identification information and obtain content stored by the user from an SNS server based on the obtained user SNS identification information and user SNS account information. The recommendation system 2000 may obtain the user blog address based on the user identification information and crawl content written in a blog, thereby obtaining the content stored by the user.

The recommendation system 2000 may determine a user tendency based on the user information.

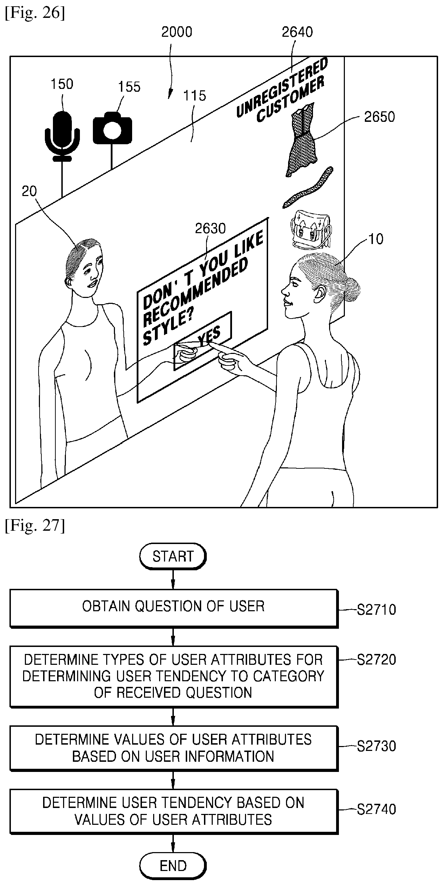

For example, the recommendation system 2000 may obtain a type of a user attribute for determining the user tendency to a category of the received question, determine a value of the user attribute based on the user information, and determine the user tendency based on the value of the user attribute. A method of determining the user tendency based on the value of the user attribute will be described with reference to FIGS. 27 through 29 later.

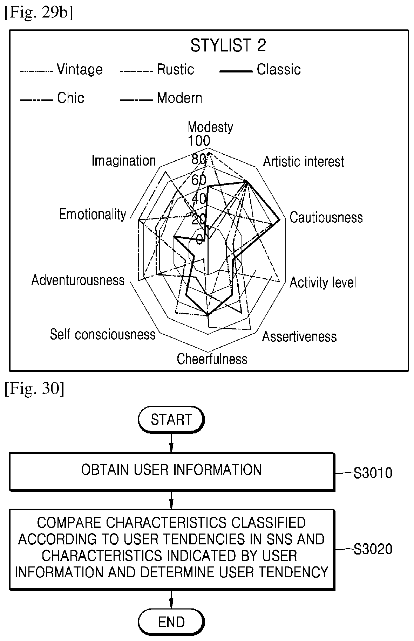

For example, the recommendation system 2000 may compare characteristics classified according to user tendencies in an SNS and a characteristic indicated by the user information and determine the user tendency. This will be described with reference to FIG. 30 below.

In operation S2230, the recommendation system 2000 may obtain one or more answers to the question based on the determined user tendency.

The recommendation system 200 may store one or more answers to the question according to the user tendency.

In operation S2240, the recommendation system 2000 may recommend the obtained one or more answers to the user.

For example, the recommendation system 2000 may display the obtained one or more answers. The recommendation system 200 may display the obtained one or more answers in the form of text, images, or moving images, or any other desired format.

The recommendation system 2000 may output the obtained one or more answers as voice.

The recommendation system 2000 may determine whether to end the recommendation service. For example, the recommendation system 2000 may end the recommendation service if the user face is not recognized for a preset period of time in the captured image. The recommendation system 2000 may end the recommendation service if the user voice is not received for the preset period of time. The recommendation system 2000 may end the recommendation service using the infrared sensor if no object is sensed. The recommendation system 2000 may end the recommendation service when receiving the user input that selects the preset button.

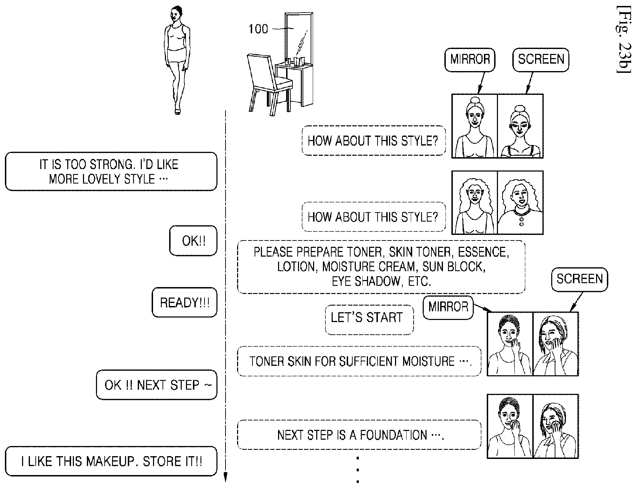

FIGS. 23A and 23B are diagrams for describing a method by which the recommendation system 2000 recommends one or more answers to a user question to a user, according to an exemplary embodiment.

Referring to FIG. 23A, when receiving the question from the user, the recommendation system 2000 may analyze the received question and request information necessary for an answer from the user again.

For example, the recommendation system 2000 may ask the user whether content analyzed by the recommendation system 2000 is correct or may ask the user an intention of the received question in order to confirm whether content of the question is correctly received. For example, when a question "I have a date today. I'd like to look pretty, young, and innocent. What should I do?" is received from the user, the recommendation system 2000 may ask the user a question "Is it correct that you want to look pretty, young, and innocent?"

For example, the recommendation system 2000 may request user information necessary for the answer from the user. For example, when a question regarding makeup is received, the recommendation system 2000 may request the user to capture an image of his/her face in order to obtain information regarding a face condition of the user, a face tone, a hair style or a face shape. In this case, the recommendation system 2000 may display a user image reflected in a switchable mirror and a captured image.

The user information may include not only the user image but also voice data, age, gender, height, tendency, a bio signal, etc., but is not limited thereto. When receiving the user information from the user, the recommendation system 2000 may determine the answer to the question based on the user information. In this case, the recommendation system 2000 may display the user image reflected in the switchable mirror and the determined answer.

Referring to FIG. 23B, the recommendation system 2000 may recommend the answer to the question based on a user response.

For example, the recommendation system 2000 may provide another answer to the question again based on the user response to the provided answer. For example, when the recommendation system 2000 displays an image expressing a specific style as an answer to a question regarding a makeup style, the user may request the recommendation system 2000 to change a recommendation makeup style to a more lovely style. Accordingly, the recommendation system 2000 may recommend a new style to the user based on a previously received user question and the user response to the provided answer.

The recommendation system 2000 may provide the answer to the question based on products owned by the user.

For example, the recommendation system 2000 may previously store information about the products owned by the user. Accordingly, the recommendation system 2000 may provide available makeup information to the user based on kinds and colors of cosmetics owned by the user. For example, when the user has toner, lotion, moisture cream, sun block, and eye shadow but does not have skin toner and essence, the recommendation system 2000 may recommend a moving image that the user is able to follow only using the toner, the lotion, the moisture cream, the sun block, and the eye shadow.

The recommendation system 2000 may provide a user interface for registering the products owned by the user. For example, when the user brings the products owned by the user close to a camera included in the recommendation system 2000, the recommendation system 2000 may capture an image of the products and determine product names, product uses, product expiry dates, etc. based on product shapes, text written on the products, and an image or product barcode included in a captured product image. The recommendation system 2000 may display information regarding a determined product and receive a user input that stores the information regarding the product in the recommendation system 2000.

For example, the recommendation system 2000 may provide the user interface for directly inputting product names and uses.

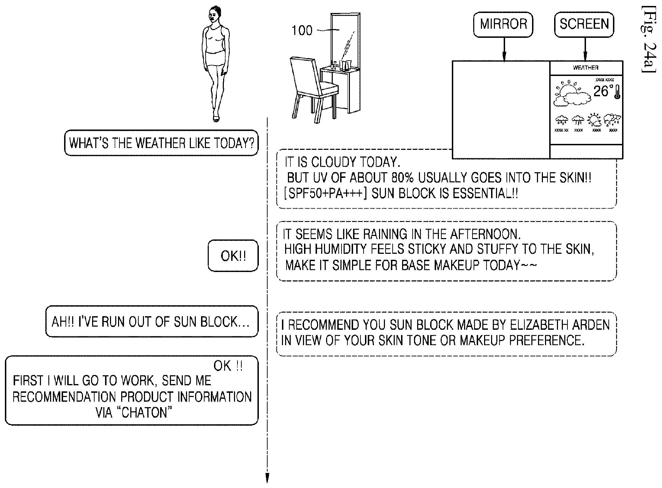

FIG. 24A is a diagram for describing a method by which the recommendation system 2000 recommends one or more answers to a user question to a user, according to another exemplary embodiment.

Referring to FIG. 24A, the recommendation system 2000 may recommend a product to the user based on products owned by the user.

When the user requests a recommendation of a product for a specific use, the recommendation system 2000 may provide a user interface for ordering the same product as that owned by the user. When the user requests to recommend the product for the specific use, the recommendation system 2000 may recommend a product not owned by the user.

For example, when voice data of content "Ah!! I've run out of a sun block" is received from the user, the recommendation system 2000 may recommend a new product more suitable for a user's skin from among products that have not been used by the user. Accordingly, the recommendation system 2000 may provide an answer "I recommend you use a sun block made by Elizabeth Arden in view of your skin tone or makeup preference."

The recommendation system 2000 may transmit information requested by the user to the device 100 of the user via a chatting server used by the user. The recommendation system 2000 may be registered in the chatting server used by the user as a user's friend that may transmit a message to the user and receive the message from the user.

When voice data of content "Send me recommendation product information via "ChatOn"" is received from the user, the recommendation system 2000 may obtain the recommendation product information and request the chatting server used by the user to transmit the obtained recommendation product information to the user. Accordingly, the device 100 of the user may execute a chatting application to display the recommendation product information transmitted by the recommendation system 2000 from the chatting server.

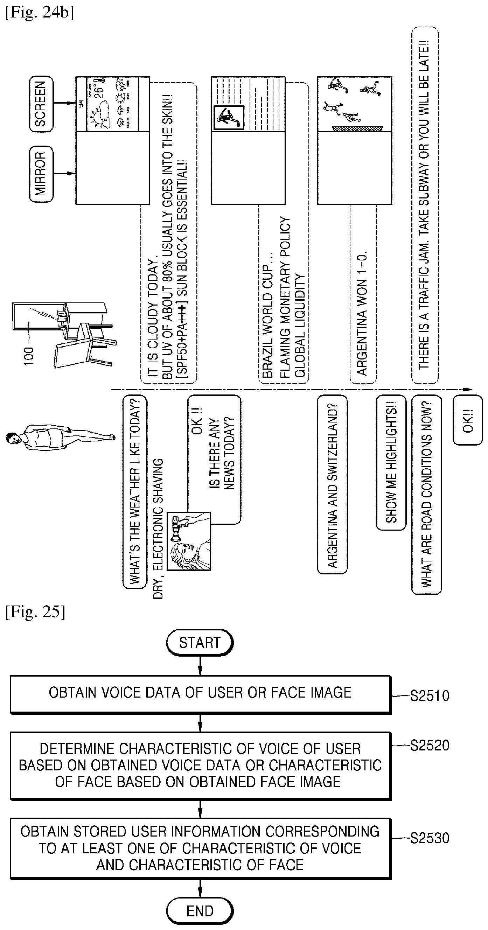

Referring to FIG. 24B, the recommendation system 2000 may provide information requested by the user and information related to the information together.

For example, when a question "What's the weather like today?" is received, the recommendation system 2000 may output information indicating today's weather in the form of voice or images and recommend a UV index, cosmetics necessary for sun block, humidity, cosmetics necessary for humidity, etc.

When a question "Argentina and Switzerland?" is received, the recommendation system 2000 may search for a game with Argentina and Switzerland among recent games, output a score of a found game in the form of voice or images, and display articles related to the game or game images.

FIG. 25 is a flowchart of a method by which the recommendation system 2000 obtains user information based on voice data of a user or a face image, according to an exemplary embodiment.

The recommendation system 2000 may be configured as the device 100 including a sensor or may be configured as the device 100 and the server.

In operation S2510, the recommendation system 2000 may obtain the voice data of the user or the face image.

The recommendation system 2000 may include a voice sensor (for example, a microphone) or an image sensor (for example, a camera). The recommendation system 2000 may receive the voice data of the user using the voice sensor. The recommendation system 2000 may obtain the face image of the user using the image sensor.

In operation S2520, the recommendation system 2000 may determine a characteristic of voice of the user based on the obtained voice data or a characteristic of a face based on the obtained face image.

For example, the recommendation system 2000 may extract the characteristic of the face of the user from a captured image using a face recognition technology.

In operation S2530, the recommendation system 2000 may obtain stored user information corresponding to at least one of the characteristic of the voice and the characteristic of the face.

The recommendation system 2000 may store the user information corresponding to the characteristic of the voice or the characteristic of the face.

For example, the recommendation system 2000 may obtain a previously registered user ID corresponding to the characteristic of the voice or the characteristic of the face. Accordingly, the recommendation system 2000 may obtain the stored user information corresponding to the obtained user ID.

For example, when a user who is not registered in the recommendation system 2000 visits a shop and requests a signage provided in the shop to recommend a product, the recommendation system 2000 may obtain voice of the user or a face image and store a time when the user visits the shop, a condition input by the user, and a product recommendation list in correspondence to a characteristic of the voice of the user or a characteristic of a face. In this regard, when the user personally sees the recommended product and comes back to the signage, the recommendation system 2000 may store a time when the user uses the recommendation system 2000, information requested by the user, and a product list recommended to the user in correspondence to the characteristic of the voice of the user or the characteristic of the face. Thus, the recommendation system 2000 may obtain voice data of the user or a face image again and recommend a new product based on the information requested by the user and products recommended to the user that have been stored in correspondence to the characteristic of the voice of the user or the characteristic of the face.

FIG. 26 is a diagram for describing a method by which the recommendation system 2000 recommends an item based on a recommendation system use history of a user who is not registered, according to an exemplary embodiment.

Referring to FIG. 26, the recommendation system 2000 may be a signage in a shop. The user may be a customer who has visited the shop.

The recommendation system 2000 may obtain voice data of the customer using a microphone 150. The recommendation system 2000 may obtain a face image of the customer using a camera 155. The recommendation system 2000 may determine whether the customer is a previously registered customer based on the obtained voice data or face image.

If the customer is not the previously registered customer, the recommendation system 2000 may store customer information in correspondence to a characteristic of voice or a characteristic of a face. For example, the recommendation system 2000 may store a time when the customer uses the recommendation system 2000, information requested by the customer, and a product recommended to the customer in correspondence to the characteristic of the voice or the characteristic of the face. In this case, the recommendation system 2000 may display an indication 2640 indicating that the customer is an unregistered customer.

When the customer comes back to the recommendation system in a while, the recommendation system 2000 may obtain the time when the customer uses the recommendation system 2000, the information requested by the customer, and the product recommended to the customer based on the voice data and the face image of the customer who is to use the recommendation system 2000. Accordingly, the recommendation system 2000 may determine that the customer is the customer that used the recommendation system 2000 a few minutes ago and display a message 2630 asking the customer if the customer does not like the recommended product. The recommendation system 2000 may recommend a new product 2650 based on the information requested by the customer and a previously recommended product.

FIG. 27 is a flowchart of a method by which the recommendation system 2000 determines a user tendency based on user information, according to an exemplary embodiment.

The recommendation system 2000 may be configured as a server and the device 100 including a display or may be implemented as the server excluding the device 100. For example, the recommendation system 2000 may be the second server 1000_b including the personalized Q&A engine 300 shown in FIG. 35A. For example, the recommendation system 2000 may be the first server 1000_a including the personalized Q&A engine 300 and the general Q&A engine 400 shown in FIG. 2.

In operation S2710, the recommendation system 2000 may obtain a question of a user.

The recommendation system 2000 may directly receive the question from the user, and, when the recommendation system 2000 is the server, may receive the question of the user from the device 100.

In operation S2720, the recommendation system 2000 may determine types of user attributes for determining the user tendency to a category of the received question. The category of the question may mean a category of data requested by the question. For example, when the question is "I have a date today. I'd like to look pretty, young, and innocent. What should I do?", the category of the question may be makeup or fashion. When the question is "Is there any news today?", the category of the question may be news.

When the category of the question is determined, the recommendation system 2000 may determine the types of the user attributes for determining the user tendency to the category of the question.

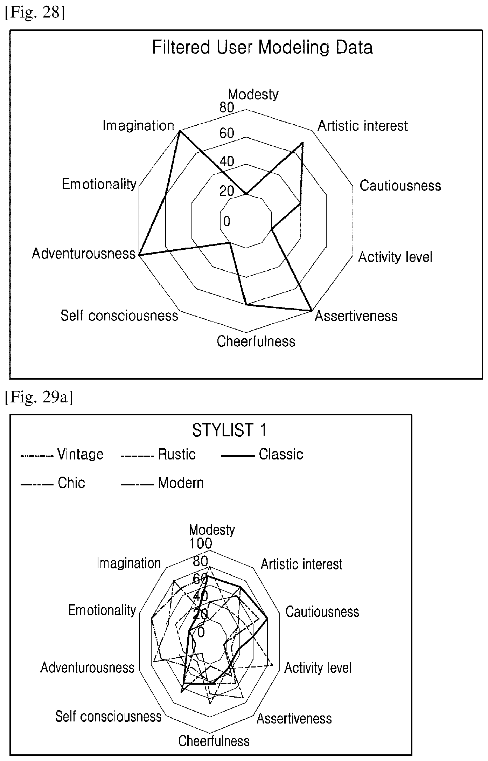

The recommendation system 2000 may determine a plurality of tendencies that may be selected according to categories. For example, referring to FIG. 29, a plurality of tendencies corresponding to fashion may include vintage, rustic, classic, chic, and modern styles. The plurality of tendencies corresponding to fashion may include a first stylist and a second stylist.

The tendency of the user among the plurality of tendencies may be determined based on the user attributes. For example, referring to FIG. 29, the user attributes for determining the tendency may include modesty, artistic interest, cautiousness, activity level, assertiveness, cheerfulness, self-consciousness, adventurousness, emotionality, and imagination, or any other attribute, as desired.

The recommendation system 2000 may store the plurality of tendencies corresponding to categories and the types of the user attributes for determining one of the plurality of tendencies and may receive them from a preset external server. For example, the recommendation system 2000 may request and obtain the plurality of tendencies corresponding to fashion and the types of the user attributes for determining one of the plurality of tendencies from the server including the general Q&A engine 400.

In operation S2730, the recommendation system 2000 may determine values of the user attributes based on user information. The user information may include gender, age, race, a product purchase history, smile information, etc. For example, when the user is a female, in her 20's, and white, the recommendation system 2000 may determine a self expression degree and an activity level to be high. When the user is a male, in his 60's, and black, the recommendation system 2000 may determine cheerfulness and emotional stability to be high.

The recommendation system 2000 may determine the values of the user attributes based on the user information obtained by crawling a web page visited by the user. For example, the recommendation system 2000 may crawl text, images, or music that is written in an SNS page of the user and determine the values of the user attributes based on words used by the user, nuance indicated by images, or a music genre, etc.

Referring to FIG. 28, the recommendation system 2000 may determine, for example, modesty of the user, artistic interest, cautiousness, activity level, assertiveness, cheerfulness, self-consciousness, adventurousness, emotionality, and imagination as 20, 70, 40, 20, 80, 60, 20, 80, 60, and 80, respectively.

In operation S2740, the recommendation system 2000 may determine the user tendency based on the value of the user attribute.

For example, the recommendation system 2000 may determine the user tendency based on the values of the user attributes. For example, the recommendation system 2000 may determine a stylist having a value similar to the values of the user attributes within a preset range. FIG. 29A illustrates tendencies that may be directed by a first stylist and values of user attributes with respect to the respective tendencies. FIG. 29B illustrates tendencies that may be directed by a second stylist and values of user attributes with respect to the respective tendencies. Values of user attributes shown in FIG. 28 are similar to a modern style of the first stylist within the preset range, and thus the recommendation system 2000 may determine the modern style of the first stylist as a recommendation style.

FIG. 30 is a flowchart of a method by which the recommendation system 2000 determines a user tendency based on a demographic characteristic, according to an exemplary embodiment.

The recommendation system 2000 may be configured as a server and the device 100 including a display or may be implemented as the server excluding the device 100. For example, the recommendation system 2000 may be the second server 1000_b including the personalized Q&A engine 300 shown in FIG. 35A. For example, the recommendation system 2000 may be the first server 1000_a including the personalized Q&A engine 300 and the general Q&A engine 400 shown in FIG. 2.

In operation S3010, the recommendation system 200 may obtain user information.

The user information may mean information indicating the demographic characteristic. The information indicating the demographic characteristic may include, for example, age, gender, a body type, a resident place, a bio signal such as heart beat, etc. but is not limited thereto. The information indicating the demographic characteristic may be previously determined in the recommendation system 2000.

The recommendation system 2000 may obtain user information stored in the recommendation system 2000. When the user information is not stored in the recommendation system 2000, the recommendation system 2000 may obtain the user information using the sensor. For example, the recommendation system 2000 may obtain voice data of a user using a microphone included in the recommendation system 2000. The recommendation system 2000 may obtain a user image using a camera included in the recommendation system 2000.

The recommendation system 2000 may determine the age of the user, the gender, the body type, etc. based on the obtained voice data or the user image. The recommendation system 2000 may determine a place where the user is located using GPS information included in the recommendation system 2000. The recommendation system 2000 may receive the bio signal of the user from a bio sensor attached to the user. For example, the recommendation system 2000 may receive the heart beat of the user from an electrocardiogram sensor attached to the user.

In operation S3020, the recommendation system 2000 may compare characteristics classified according to user tendencies in an SNS and characteristics indicated by the user information and determine the user tendency.

As to the characteristics classified according to the user tendencies in the SNS, for example, users who prefer a vintage style may have characteristics of being in their 20's, a male, and a "skinny" body type. A server providing the SNS may classify and store characteristics indicating the user tendencies by using information of users collected via the SNS.

Accordingly, the recommendation system 2000 may compare the characteristics classified according to the user tendencies in the SNS and the characteristics indicated by the user information and determine the user tendency.

For example, when the user information is 30's, a female, and a "fat" type, the recommendation system 2000 may determine a classic style that is determined to correspond to the 30's, the female, and the "fat" type as the user tendency.

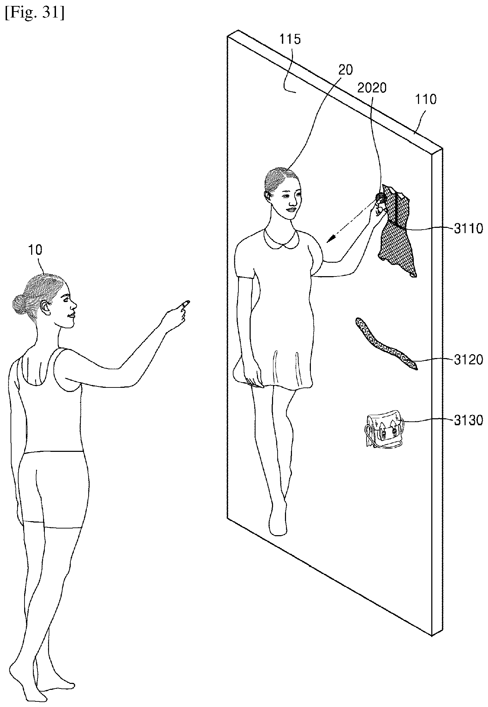

FIG. 31 is a diagram for describing a method by which the device 100 displays a recommendation item, according to an exemplary embodiment.

Referring to FIG. 31, the device 100 may display a user image reflected in a switchable mirror and the recommendation item.

For example, when a user requests a clothes item that fits the user, the device 100 may request the clothes item that fits the user from a server and receive the clothes item from the server.

When the clothes items, for example items 3110, 3120, and 3130, are received from the server, the device 100 may display the user image reflected in the switchable mirror and the received clothes items.

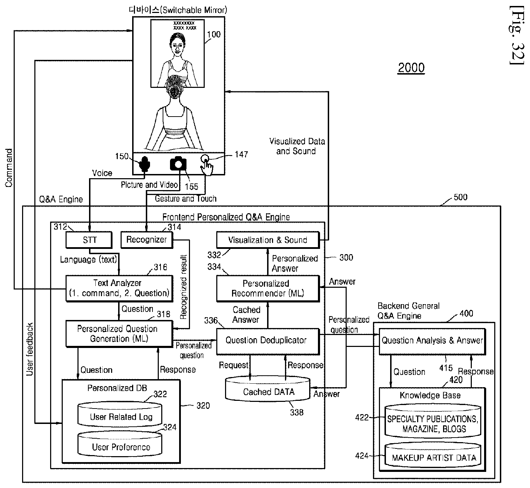

FIG. 32 is a block diagram of the recommendation system 2000, according to an exemplary embodiment.

Referring to FIG. 32, the recommendation system 2000 may be configured as the device 100 and a Q&A engine 500. The Q&A engine 500 may be implemented as a server different from the device 100 or as software, hardware, or a combination of software and hardware inside the device 100. When the Q&A engine 500 is implemented inside the device 100, the device 100 may include the recommendation system 2000.

The device 100 may include the display 110. The display 110 may operate as at least one of a mirror and a screen by combining the switchable mirror 115 and the display device 117 that displays an object.

The device 100 may include various types of sensors. For example, the device 100 may include the microphone 150, the camera 155, an infrared sensor, and a touch sensor 147. The device 100 may receive voice data from a user using the microphone 150 included in the device 100. For example, the device 100 may receive a question, an instruction, and requested voice data of the user from the user. The device 100 may capture the user using the camera 155 included in the device 100 to obtain an image indicating a user's face, torso, a specific part, etc. The device 100 may determine whether the user is present around, a distance from the device 100 to the user, or a direction in which the user looks using the infrared sensor included in the device 100. The device 100 may receive a user input using the touch sensor 147. For example, the touch sensor 147 may be attached to the switchable mirror 115. Accordingly, the device 100 may determine a touch location on the switchable mirror 115 and recognize a touch gesture.

The device 100 may transmit the received question, instruction, or the requested voice data to the Q&A engine 500. The device 100 may transmit the voice data and an image of the captured user to the Q&A engine 500 as user information. The device 100 may receive an answer to the question from the Q&A engine 500.

The Q&A engine 500 may be separated into the personalized Q&A engine 300 and the general Q&A engine 400. The personalized Q&A engine 300 and the general Q&A engine 400 may be separated into different servers or a single server.

The personalized Q&A engine 300 may obtain the question and the user information, determine a user tendency based on the user information, convert the question received from the user based on the determined user tendency, transmit the converted question to the general Q&A engine 400, receive candidate answers to the question from the general Q&A engine 400, and select an accurate answer based on reliability or accuracy among the received candidate answers. The personalized Q&A engine 300 may store the user information.

The personalized Q&A engine 300 may analyze the question of the user, correct the question based on the user information, obtain one or more answers from the general Q&A engine 400 based on the corrected question, and transmit the obtained answers to the device 100.

The personalized Q&A engine 300 may include a Speech-to-Text (STT) unit 312, a recognizer 314, a text analyzer 316, a personalized question generator 318, a personalized DB 320, a cached DATA 338, a question deduplicator 336, a personalized recommender 334, and a visualization & sound unit 332.

The STT unit 312 may recognize user's voice and convert the voice into text.

The recognizer 314 may recognize a user's face and motion that are included in a photo or a moving image taken by using a camera. For example, the recognizer 314 may recognize a user gesture that inputs a touch on a switchable mirror.

A question input using the user's voice may be an interrogative sentence or an imperative sentence used by the device 100 to perform a specific operation. The question input using the user's voice may be various sentences such as a declarative question, an exclamatory sentence, etc. in addition to the interrogative sentence or the imperative sentence.

The text analyzer 316 may determine whether the question input using the user's voice is the interrogative sentence or the imperative sentence based on a question converted into text through the STT unit 312. When the question input using the user's voice is the interrogative sentence, the text analyzer 316 may transmit the question converted into text to the personalized question generator 318. When question input using the user's voice is the imperative sentence, the text analyzer 316 may determine one of a plurality of previously stored instructions based on the imperative sentence and operate the device 100 based on the determined instruction.

The personalized question generator 318 may receive the user information from the personalized DB 320, analyze the meaning of words or expressions included in the question input using the user's voice and characteristics based on the received user information, and correct the question in order to obtain a more accurate answer from the general Q&A engine 400.

For example, when a user A requests "I want to look beautiful", the personalized question generator 318 may correct a sentence "I want to look beautiful" to a sentence "I want to look good", whereas, when a user B requests "I want to look beautiful", the personalized question generator 318 may correct the sentence "I want to look beautiful" to a sentence "I want to look sexy".

The personalized DB 320 may store user data. The user data may include a user related log database 322 and a user preference tendency database 324. The user related log database 322 may store a user related log. The user related log may include, for example, a question input by the user, an item selected by the user among a plurality of recommended answers, a list of purchased products among a plurality of recommended products, or an additional question input by the user regarding a specific answer.

The user preference tendency database 324 may store user preference tendency information computed based on the user related log. The user preference tendency information may include, for example, information regarding a style or a type preferred by the user in a specific field. For example, the user preference tendency information may be a fashion style preferred by the user, a makeup style, or a type of food.

The personalized question generator 318 may transmit the corrected question to the question deduplicator 336. The question deduplicator 336 may determine whether the received question has been received before based on the user related log stored in the personalized DB 320. When it is determined that the received question has been received before, the question deduplicator 336 may obtain an answer to the question from the cached DATA 338 and transmit the obtained answer to the personalized recommender 334.

When it is determined that the received question has not been received before, the question deduplicator 336 may ask the general Q&A engine 400 for the received question.

The personalized recommender 334 may receive an answer to the question from the general Q&A engine 400. The personalized recommender 334 may receive a plurality of answers from the general Q&A engine 400. In this case, the personalized recommender 334 may select at least one of the plurality of answers based on the user information. For example, the personalized recommender 334 may select an answer that has been selected by the user based on the user related log. The personalized recommender 334 may select an answer having a high probability that the user may select from among the plurality of answers based on the user preference tendency information. The personalized recommender 334 may transmit the selected answer to the visualization & sound unit 332.

The visualization & sound unit 332 may generate an image, voice, text, etc. indicating the received answer. The visualization & sound unit 332 may transmit the generated image, voice, text, etc. to the device 100. The device 100 may output the received image, voice, and text.

The general Q&A engine 400 may include a question analysis & answer unit 415 and a knowledge base 420.

The question analysis & answer unit 415 may analyze the question received from the personalized Q&A engine 300 and transmit an answer to the question to the personalized Q&A engine 300.

The question analysis & answer unit 415 may query information necessary for generating the answer to the question to the knowledge base 420 and receive the requested information from the knowledge base 420.

The knowledge base 420 may store various types of information. For example, the knowledge base 420 may store specialty publications, magazine, and blogs 422, and beauty information regarding makeup artists 424.

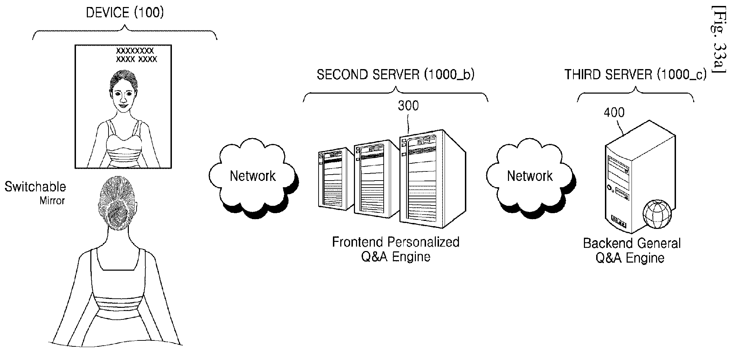

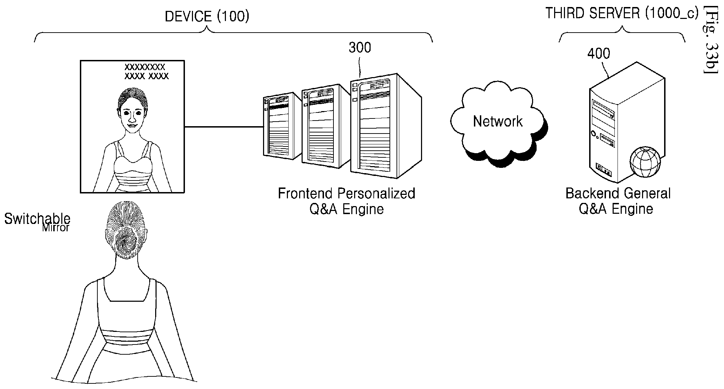

FIGS. 33A and 33B illustrate the recommendation system 2000, according to an exemplary embodiment.

Referring to FIG. 33A, the recommendation system 2000 may include the device 100, the second server 1000_b including the personalized Q&A engine 300, and a third server 1000_c including the general Q&A engine 400.

As shown in FIG. 33A, the recommendation system 2000 may be separated into the device 100, the personalized Q&A engine 300, and the general Q&A engine 400. The device 100, the personalized Q&A engine 300, and the general Q&A engine 400 may be manufactured or managed by different companies.

Referring to FIG. 33B, the recommendation system 2000 may include the device 100 including the personalized Q&A engine 300 and the third server 1000_c including the general Q&A engine 400.

For example, in the case of the recommendation system 2000 for home use, the personalized Q&A engine 300 may be included in the device 100. The device 100 and the third server 1000_c may transmit and receive data over a network.

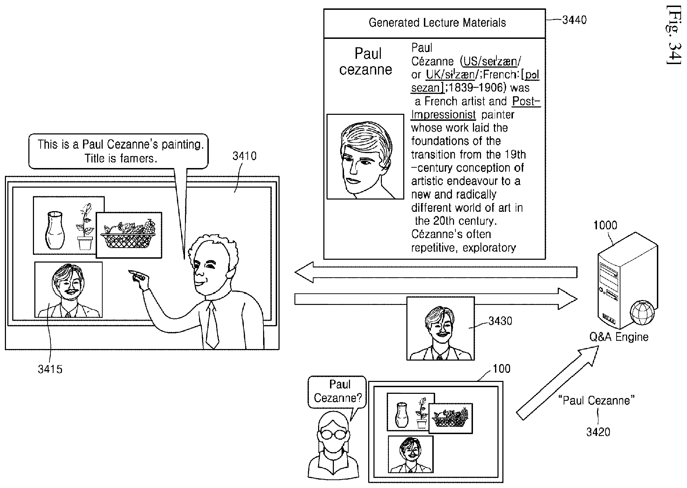

FIG. 34 is a diagram for describing a method by which the recommendation system 2000 dynamically provides lecture materials in response to a user request during a video lecture, according to an exemplary embodiment.

Referring to FIG. 34, the recommendation system 2000 may include a smart board 3410, the device 100, and a server 1000 including a Q&A engine.

When a lecturer selectively displays previously generated lecture materials, the smart board 3410 may transmit an image displayed on a screen 3415 and the lecturer's voice to a preset lecture relay server to provide a lecture to a lecture recipient.

The device 100 may be a device of the lecture recipient. The device 100 may be connected to the preset lecture relay server to receive the lecture image transmitted by the smart board 3410 of the lecturer and display a received video.

The recommendation system 2000 may dynamically provide lecture materials in response to the lecturer or a request of the lecture recipient during the video lecture.

For example, when lecture content relates to the painter "Paul Cezanne", the lecture recipient may request the device 100 to explain the painter "Paul Cezanne". When voice data 3420 of the lecture recipient who asks for information 3440 regarding "Paul Cezanne" is received, the device 100 may request the information regarding "Paul Cezanne" included in the lecture content from the Q&A server 1000.

When a request for the information "Paul Cezanne" is received from the device 100, the Q&A server 1000 may transmit the information 3440 regarding "Paul Cezanne" to the smart board 3410 of the lecturer. The smart board 3410 of the lecturer may display the information 3440 regarding "Paul Cezanne" received from the Q&A server 1000. In this case, the smart board 3410 of the lecturer may display a notification window notifying that the information 3440 regarding "Paul Cezanne" is received from the Q&A server 1000, and, according to a lecturer's selection, may display or may not display the received information 3440 regarding "Paul Cezanne".

When the information 3440 regarding "Paul Cezanne" is received, the smart board 3410 may transmit a lecture image including the information 3440 regarding "Paul Cezanne" to the lecture relay server to provide the information 3440 regarding "Paul Cezanne" to the lecture recipient.

According to an exemplary embodiment, the Q&A server 1000 may provide requested information to only the device 100 that requests information, rather than to the smart board 3410.

The smart board 3410 may select a displayed object during the lecture and receive a user input of the lecturer that requests information regarding the selected object or receive voice data of the lecturer who asks a question.

When the user input that requests the information regarding the selected object is received from the lecturer, the smart board 3410 may request the information regarding the selected object from the Q&A server 1000. When voice data of the lecturer who asks the question is received from the lecturer, the smart board 3410 may transmit the received voice data to the Q&A server 1000.

For example, when a user input that requests information regarding paintings by "Paul Cezanne" is received from the lecturer, the smart board 3410 may transmit a display image 3430 of a painting by "Paul Cezanne" to the Q&A server 1000 and request information regarding the transmitted painting image.

When a request for the information regarding the image is received from the smart board 3410, the Q&A server 1000 may transmit the information regarding the received image to the smart board 3410 of the lecturer.

Accordingly, the recommendation system 2000 may dynamically provide lecture materials in response to the lecturer or the request of the lecture recipient.

FIG. 35 is a diagram for describing a method by which the device 100 monitors a home environment state or a health condition of a user and provides a monitoring result, according to an exemplary embodiment.

Referring to FIG. 35, the device 100 may include a display. For example, the device 100 may be a home appliance such as a smart TV and a mobile device such as a tablet PC and a smart phone.

The device 100 may be connected to a home network to receive information regarding the home environment state from a home server that manages a home environment and display the received information regarding the home environment state. The home server may receive sensor values from environment measurement sensors located at various home places.

For example, the device 100 may obtain information regarding an indoor temperature, an indoor air quality (for example, a CO value), etc., compare an indoor state and an outdoor state, and ventilate indoors or advise the user to block a heat exchange with outdoors for energy conservation.

The device 100 may receive information regarding the health condition of the user from a peripheral device, determine whether the health condition of the user is lower than a reference level based on the received information regarding the health condition of the user, and, when the health condition of the user is lower than the reference level, output a message or signal sound informing an emergency.

For example, the device 100 may receive information regarding a temperature of the user using a peripheral device including an infrared sensor or receive information regarding a heat beat of the user from an electrocardiogram sensor attached to a body of the user and determine the health condition of the user based on the received information regarding the temperature or the heart beat.

When the health condition of the user is lower than the reference level or an indoor environment rapidly changes, the device 100 may automatically transmit a warning message to a preset server. In this case, the preset server may include a clinic server, a fire station server, and a 119 service providing server but is not limited thereto.

The device 100 may include a camera to capture an emergency using the camera during the emergency and transmit a captured image to the preset server. Accordingly, the device 100 may provide a function that a fire station or a remotely treated person primarily checks the home environment state or the health condition of the user.

FIG. 36 is a block diagram of the device 100, according to an exemplary embodiment.

Referring to FIG. 36, the relay device 100 may include the display 110, a communicator 130, a user input 145, and a processor 170. However, not all components shown in FIG. 36 are essential. In other words, the device 100 may include more or less components than those shown in FIG. 36.

The display 110 may operate as at least one of a screen and a mirror according to a user input. A part of the display 110 may operate as the screen and another part thereof may operate as the mirror.

The display 110 may display an object regarding information that is to be provided to the user.

The processor 170 may determine a location of a user image reflected in the display 110 when a user is located in front of the display 110.

The processor 170 may determine a display location of the object based on the determined location of the user image.

The processor 170 may determine the display location of the object such that the user image reflected in the display 110 and the object do not overlap with each other.

The processor 170 may determine the display location of the user image such that a part of the user image reflected in the display 110 corresponding to a preset part of a body and the object overlap with each other.

The processor 170 may determine the display location of the object based on a location of user's eyes in the user image reflected in the display 110.

The processor 170 may determine a distance from the display 110 to the user and determine at least one of a size and a resolution of the object based on the determined distance.

The processor 170 may determine the distance from the display 110 to the user based on a size of the user image reflected in the display 110.

When the object is a moving image indicating motions that the user is able to follow, the processor 170 may flip the moving image horizontally according to a shape of the user image reflected in the display 110.

The user input 145 may select the object displayed on the display 110 and receive a user input that moves the selected object. The processor 170 may determine the display location of the object based on the received user input.

The user input 145 may receive a question from the user. The processor 170 may recommend an object indicating an answer to the question based on the received question. In this case, the processor 170 may request the answer to the question from a preset server through the communicator 130 and recommend the object indicating the answer to the question when receiving the answer from the preset server.

The device 100 may further include a sensor for obtaining at least one of voice data of the user and a face image. The processor 170 may identify the user based on the obtained at least one of the voice data of the user and the face image and recommend an object that is to be displayed on the display 110 based on user information of the user stored in correspondence to an identification value of the user.

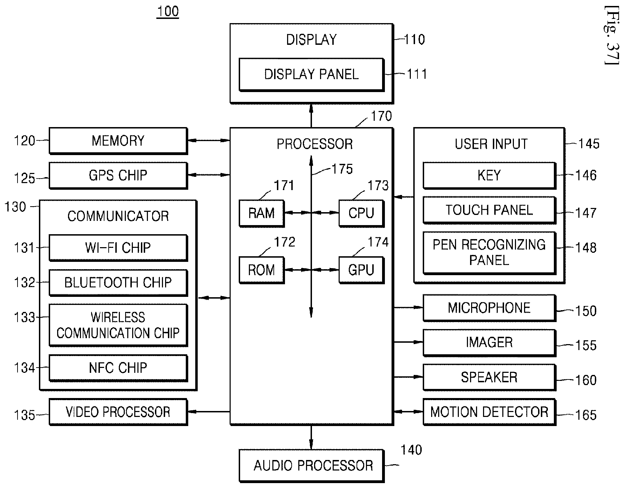

FIG. 37 is a block diagram of the device 100, according to another exemplary embodiment.

As shown in FIG. 37, the device 100 may be applied to any one of various devices, such as a camera, a mobile phone, a tablet PC, a PDA, an MP3 player, a kiosk, an electronic frame, a navigation device, a digital TV, a smart watch, a wrist watch, a digital signage, a smart dressing table, smart glasses, or a head-mounted display (HMD).

Referring to FIG. 37, the device 100 may include at least one of a memory 120, a global positioning system (GPS) chip 125, a video processor 135, an audio processor 140, a microphone 150, an imager 155, a speaker 160, and a motion detector 165, in addition to the display 110, the communicator 130, the user input 145, and the processor 170.

The display 110 may include a display panel 111 and a controller (not shown) that controls the display panel 111. The display panel 111 may be realized in a display of any type, such as a liquid crystal display (LCD), an organic light-emitting diode (OLED) display, an active-matrix OLED (AM-OLED), or a plasma display panel (PDP). The display panel 111 may be flexible, transparent, or wearable. The display 110 may be provided as a touch screen by being combined with a touch panel 147 of the user input 145. For example, the touch screen may include an integrated module in which the display panel 111 and the touch panel 147 are combined in a stacked structure.

The memory 120 may include at least one of an internal memory (not shown) and an external memory (not shown).

Examples of the internal memory include volatile memories (for example, a dynamic random access memory (DRAM), a static RAM (SRAM), and a synchronous DRAM (SDRAM)), nonvolatile memories (for example, a one-time programmable read-only memory (OTPROM), a programmable ROM (PROM), an erasable and programmable ROM (EPROM), an electrically erasable and programmable ROM (EEPROM), a mask ROM, and a flash ROM), a hard disk drive (HDD), and a solid state drive (SSD). According to an exemplary embodiment, the processor 170 may load, on a volatile memory, a command or data received from at least one of nonvolatile memories or other components, and process the command or data. Also, the processor 170 may store data received from or generated by other components in a nonvolatile memory.

Examples of the external memory include a compact flash (CF) memory, a secure digital (SD) memory, a micro SD memory, a mini-SD memory, an extreme digital (XD) memory, and a memory stick.

The memory 120 may store various programs and data used to operate the device 100.

The processor 170 may control the display 110 such that a part of content stored in the memory 120 is displayed on the display 110. In other words, the processor 170 may display the part of the content stored in the memory 120 on the display 110. Alternatively, the processor 170 may perform a control operation corresponding to a user gesture when the user gesture is performed on one region of the display 110.

The processor 170 may include at least one of an RAM 171, an ROM 172, a central processing unit (CPU) 173, a graphic processing unit (GPU) 174, and a bus 175. The RAM 171, the ROM 172, the CPU 173, and the GPU 174 may be connected to each other via the bus 175.

The CPU 173 accesses the memory 120 and performs booting by using an operating system (OS) stored in the memory 120. Also, the CPU 173 performs various operations by using various programs, contents, and data stored in the memory 120.

Command sets for system booting are stored in the ROM 172. For example, when power is supplied to the device 100 as a turn-on command is input, the CPU 173 may copy an OS stored in the memory 120 to the RAM 171 according to a command stored in the ROM 172, and execute the OS for the system booting. When the system booting is completed, the CPU 173 copies various programs stored in the memory 120 to the RAM 171, and executes the programs copied in the RAM 171 to perform various operations. When the system booting is completed, the GPU 174 displays a user interface screen in a region of the display 110. In detail, the GPU 174 may generate a screen displaying an electronic document including various objects, such as content, an icon, and a menu. The GPU 174 calculates attribute values, such as coordinate values, shapes, sizes, and colors, of the various objects according to a layout of the screen. Then, the GPU 174 may generate the screen having any one of various layouts based on the calculated attribute values. The screen generated by the GPU 174 may be provided to the display 110 and displayed on each region of the display 110.

The GPS chip 125 may receive a GPS signal from a GPS satellite, and calculate a current location of the device 100. The processor 170 may calculate the location of the device 100 by using the GPS chip 125 when a navigation program is used or when a current location of the user is required.

The communicator 130 may communicate with an external device by using any one of various communication methods. The communicator 130 may include at least one of a Wi-Fi chip 131, a Bluetooth chip 132, a wireless communication chip 133, and a near-field communication (NFC) chip 134. The processor 170 may communicate with any one of various external devices by using the communicator 130.

The Wi-Fi chip 131, the Bluetooth chip 132 may perform communication by respectively using a Wi-Fi method and a Bluetooth method. When the Wi-Fi chip 131 or the Bluetooth chip 132 is used, various types of connection information, such as subsystem identification (SSID) or a session key, are first transferred, and then various types of information may be transferred by using the connection information. The wireless communication chip 133 is a chip that performs communication according to any one of various communication standards, such as IEEE, ZigBee, third generation (3G), third generation partnership project (3GPP), and LTE. The NFC chip 134 is a chip that operates by using an NFC method using a frequency band of 13.56 MHz from among radio frequency identification (RFID) frequency bands, such as 135 kHz, 13.56 MHz, 433 MHz, 860 through 960 MHz, and 2.45 GHz.

The video processor 135 may process video data included content received through the communicator 130 or included in content stored in the memory 120. The video processor 135 may perform various image processes, such as decoding, scaling, noise-filtering, frame rate changing, and resolution changing, on video data.

The audio processor 140 may process audio data included in content received through the communicator 130 or included in content stored in the memory 120. The audio processor 140 may perform various processes, such as decoding, amplifying, and noise-filtering, on audio data.

When a reproduction program regarding multimedia content is executed, the processor 170 may reproduce the multimedia content by driving the video processor 135 and the audio processor 140. The speaker 160 may output audio data generated by the audio processor 140.

The user input 145 may receive various commands from the user. The user input 145 may include at least one of a key 146, the touch panel 147, and a pen recognizing panel 148.

The key 146 may include various types of keys, such as a mechanical button and a wheel, which are formed on various regions, such as a front region, a side region, and a rear region, of an external body of the device 100.

The touch panel 147 may detect a touch input of the user, and output a touch event value corresponding to the touch input. When the touch panel 147 forms a touch screen by combining with the display panel 111, the touch screen may include as a touch sensor in any type, such as an electrostatic type, a pressure type, or a piezoelectric type. The electrostatic type touch sensor calculates a touch coordinate by detecting micro-electricity induced by a body of the user when the body of the user touches a surface of the touch screen, by using a dielectric substance coated on the surface of the touch screen. The pressure type touch sensor calculates a touch coordinate by detecting a current generated as upper and lower electrode plates included in the touch screen contact each other when the user touches the touch screen. A touch event generated on the touch screen may be mainly generated by a finger of the user, but may alternatively generated by an object formed of a conductive material that may generate a change in electrostatic capacitance.

The pen recognizing panel 148 may detect a proximity input or a touch input of a touch pen, such as a stylus pen or a digitizer pen, and output a pen proximity event or a pen touch event. The pen recognizing panel 148 may use an electromagnetic radiation (EMR) method, and detect the proximity input or the touch input based on a change of intensity of an electromagnetic field, which is caused by approach or touch of the touch pen. In detail, the pen recognizing panel 148 may include an electron inducing coil sensor (not shown) having a grid structure, and an electronic signal processor (not shown) that provides an alternating signal having a certain frequency sequentially to loop coils of the electron inducing coil sensor. When a pen including a resonance circuit is near the loop coil of the pen recognizing panel 148, a magnetic field transmitted from the loop coil generates a current based on mutual electron induction, in the resonance circuit. Then, based on the current, an induction magnetic field is generated from a coil forming the resonance circuit, and the pen recognizing panel 148 detects the induction magnetic field from a loop coil in a signal reception state, thereby detecting a proximity or touch location of the pen. The pen recognizing panel 148 may have an area for covering a certain area below the display panel 111, for example, a display region of the display panel 111.

The microphone 150 may change user's voice or other sound to audio data. The processor 170 may use the user's voice for a call operation, or store the audio data in the memory 120.

The imager 155 may capture a still image or a moving image based on control of the user. The imager 155 may include a plurality of cameras, such as a front camera and a rear camera.

When the imager 155 and the microphone 150 are provided, the processor 170 may perform a control operation according user's voice input through the microphone 150 or user motion recognized by the imager 155. For example, the device 100 may operate in a motion control mode or a voice control mode. When the device 100 is in a motion control mode, the processor 170 may activate the imager 155 to photograph the user, and perform a control operation by tracking a motion change of the user. When the device 100 is in a voice control mode, the processor 170 may analyze user's voice input through the microphone 150, and perform a control operation based on the analyzed user's voice.

The motion detector 165 may detect movement of the body of the device 100. The device 100 may rotate or tilt in any one of various directions. At this time, the motion detector 165 may detect a movement characteristic, such as a rotation direction, a rotation angle, or a tilted angle, by using at least one of various sensors, such as a terrestrial magnetic sensor, a gyro sensor, and an acceleration sensor.

Although not shown in FIG. 37, according to one or more exemplary embodiments, the device 100 may further include a universal serial bus (USB) port to which a USB connector is connected, various external input ports to which various external terminals, such as a headset, a mouse, and a LAN cable, are connected, a digital multimedia broadcasting (DMB) chip that receives and processes a DMB signal, and various sensors.

Names of the components of the device 100 described above may be changed. Also, the device 100 may include at least one of the components described above, may not include some of the components, or may further include other components.

One or more exemplary embodiments may also be embodied as computer-readable codes on a non-transitory computer-readable recording medium. The non-transitory computer-readable recording medium is any data storage device that can store data which can be thereafter read by a computer system. The computer-readable codes are configured to perform operations realizing a method of controlling an electronic apparatus according to one or more exemplary embodiments when read from the computer-readable recording medium and executed by a processor. The computer-readable codes may be in various programming languages. Also, functional programs, codes, and code segments for accomplishing one or more exemplary embodiments may be easily construed by programmers of ordinary skill in the art to which the one or more exemplary embodiments pertains. Examples of the non-transitory computer-readable recording medium include read-only memory (ROM), random-access memory (RAM), CD-ROMs, magnetic tapes, floppy disks, optical data storage devices, etc. The non-transitory computer-readable recording medium may also be distributed over network coupled computer systems so that the computer-readable code is stored and executed in a distributed fashion.

It should be understood that the exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope as defined by the following claims.

## Claims

1. A device (100) comprising:
a display (110) configured to display an object (2010) at an object display location on the display, the object comprises a moving image indicating an example motion of a demonstrator to be followed by a user, and to provide a reflected user image (20) at a reflected user image location on the display; and
a processor (170) configured to detect the reflected user image location, and to determine the object display location based on the reflected user image location;
wherein the processor (170) is further configured to:
detect a shape of the reflected user image and a shape of the displayed demonstrator,
compare the shape of the reflected user image and the shape of the displayed demonstrator, and
flip the moving image horizontally based on a result of the comparison so that left and right motions of the reflected user image and left and right motions of the displayed demonstrator are the same.

2. The device of claim 1, wherein the processor (170) is further configured to determine the object display location such that the object display location is different from the reflected user image location.

3. The device of claim 1, wherein the processor (170) is further configured to determine a distance from the display (110) to the user and determine at least one of a size and a resolution of the object based on the determined distance.

4. An image display method comprising:
displaying an object (2010) at an object display location on a display, the object comprises a moving image indicating an example motion of a demonstrator to be followed by a user;
detecting a reflected user image (20) at a reflected user image location; and
determining the object display location based on the detected reflected user image location;
wherein the method further comprises:
detecting a shape of the reflected user image and a shape of the displayed demonstrator,
comparing the shape of the reflected user image and the shape of the displayed demonstrator, and
flipping the moving image horizontally based on a result of the comparison so that left and right motions of the reflected user image and left and right motions of the displayed demonstrator are the same.

5. The image display method of claim 4, wherein determining the object display location further comprises determining the object display location such that the reflected user image location is different from the object display location.

6. The image display method of claim 4, wherein determining the object display location further comprises determining a distance from the display (110) to the user, and determining at least one of a size and a resolution of the object based on the determined distance.

7. A non-transitory computer-readable recording medium having recorded thereon a computer program for performing the method of claim 4.

## Patentansprüche

1. Vorrichtung (100), umfassend:
eine Anzeige (110), die konfiguriert ist, um ein Objekt (2010) an einer Objektanzeigestelle auf der Anzeige anzuzeigen, wobei das Objekt ein bewegliches Bild umfasst, das eine von einem Nutzer nachzuahmende Beispielbewegung eines Präsentators zeigt, und ein reflektiertes Nutzerbild (20) an einer Stelle des reflektierten Nutzerbilds auf der Anzeige anzuzeigen; und
einen Prozessor (170), der konfiguriert ist, um die Stelle des reflektierten Nutzerbilds zu detektieren und die Objektanzeigestelle basierend auf der Stelle des reflektierten Nutzerbilds zu bestimmen; wobei der Prozessor (170) ferner konfiguriert ist, um:
eine Form des reflektierten Nutzerbilds und eine Form des angezeigten Präsentators zu detektieren, die Form des reflektierten Nutzerbilds und die Form des angezeigten Präsentators zu vergleichen und das bewegliche Bild horizontal umzukehren, basierend auf dem Ergebnis des Vergleichs, so dass die Links- und Rechtsbewegungen des reflektierten Nutzerbilds und die Links- und Rechtsbewegungen des angezeigten Präsentators identisch sind.

2. Vorrichtung nach Anspruch 1, wobei der Prozessor (170) ferner konfiguriert ist, um die Objektanzeigestelle zu bestimmen, so dass sich die Objektanzeigestelle von der Stelle des reflektierten Nutzerbilds unterscheidet.

3. Vorrichtung nach Anspruch 1, wobei der Prozessor (170) ferner konfiguriert ist, um einen Abstand von der Anzeige (110) zum Nutzer zu bestimmen und mindestens eine einer Größe und einer Auflösung des Objekts basierend auf dem bestimmten Abstand zu bestimmen.

4. Bildanzeigeverfahren, umfassend:
ein Anzeigen eines Objekts (2010) an einer Objektanzeigestelle auf einer Anzeige, wobei das Objekt ein bewegliches Bild umfasst, das eine von einem Nutzer nachzuahmende Beispielbewegung eines Präsentators zeigt;
ein Detektieren eines reflektierten Nutzerbilds (20) an einer Stelle des reflektierten Nutzerbilds; und
ein Bestimmen der Objektanzeigestelle basierend auf der Stelle des reflektierten Nutzerbilds;
wobei das Verfahren ferner Folgendes umfasst:
ein Detektieren einer Form des reflektierten Nutzerbilds und einer Form des angezeigten Präsentators, ein Vergleichen der Form des reflektierten Nutzerbilds und der Form des angezeigten Präsentators und ein horizontales Umkehren des beweglichen Bilds basierend auf dem Ergebnis des Vergleichs, so dass die Links- und Rechtsbewegungen des reflektierten Nutzerbilds und die Links- und Rechtsbewegungen des angezeigten Präsentators identisch sind.

5. Bildanzeigeverfahren nach Anspruch 4, wobei das Bestimmen der Objektanzeigestelle ferner ein Bestimmen der Objektanzeigestelle umfasst, so dass sich die Stelle des reflektierten Nutzerbilds von der Objektanzeigestelle unterscheidet.

6. Bildanzeigeverfahren nach Anspruch 4, wobei das Bestimmen der Objektanzeigestelle ferner ein Bestimmen eines Abstands von der Anzeige (110) zum Nutzer und mindestens eine einer Größe und einer Auflösung des Objekts basierend auf dem bestimmten Abstand umfasst.

7. Nicht-transitorisches computerlesbares Aufzeichnungsmedium mit darauf aufgezeichnet einem Computerprogramm zum Ausführen des Verfahrens nach Anspruch 4.

## Revendications

1. Dispositif (100) comprenant :
un dispositif d'affichage (110) configuré pour afficher un objet (2010) à un emplacement d'affichage de l'objet sur le dispositif d'affichage, l'objet comprenant une image animée indiquant un exemple de mouvement d'un démonstrateur que doit suivre un utilisateur, et pour fournir une image réfléchie de l'utilisateur (20) à un emplacement de l'image réfléchie de l'utilisateur sur le dispositif d'affichage ; et
un processeur (170) configuré pour détecter l'emplacement de l'image réfléchie de l'utilisateur, et déterminer l'emplacement d'affichage de l'objet d'après l'emplacement de l'image réfléchie de l'utilisateur ;
le processeur (170) étant configuré en outre pour :
détecter une forme de l'image réfléchie de l'utilisateur et une forme du démonstrateur affiché, comparer la forme de l'image réfléchie de l'utilisateur et la forme du démonstrateur affiché, et basculer horizontalement l'image animée en fonction d'un résultat de la comparaison, de sorte que les mouvements à gauche et à droite de l'image réfléchie de l'utilisateur et les mouvements à gauche et à droite du démonstrateur affiché soient les mêmes.

2. Dispositif selon la revendication 1, le processeur (170) étant configuré en outre pour déterminer l'emplacement d'affichage de l'objet, afin que l'emplacement d'affichage de l'objet soit différent de l'emplacement de l'image réfléchie de l'utilisateur.

3. Dispositif selon la revendication 1, le processeur (170) étant configuré en outre pour déterminer une distance du dispositif d'affichage (110) à l'utilisateur, et déterminer au moins une d'une taille et d'une résolution de l'objet en fonction de la distance déterminée.

4. Méthode d'affichage d'une image comprenant :
l'affichage d'un objet (2010) à emplacement d'affichage de l'objet sur un dispositif d'affichage, l'objet comprenant une image animée indiquant un exemple de mouvement d'un démonstrateur que doit suivre l'utilisateur ;
la détection d'une image réfléchie de l'utilisateur (20) à un emplacement de l'image réfléchie de l'utilisateur ; et
la détermination de l'emplacement d'affichage de l'objet d'après l'emplacement détecté de l'image réfléchie de l'utilisateur ;
la méthode comprenant en outre :
la détection d'une forme de l'image réfléchie de l'utilisateur et d'une forme du démonstrateur affiché, la comparaison de la forme de l'image réfléchie de l'utilisateur et de la forme du démonstrateur affiché, et le basculement horizontal de l'image animée en fonction d'un résultat de la comparaison, de sorte que les mouvements à gauche et à droite de l'image réfléchie de l'utilisateur et les mouvements à gauche et à droite du démonstrateur affiché soient les mêmes.

5. Méthode d'affichage d'une image selon la revendication 4, la détermination de l'emplacement d'affichage de l'objet comprenant en outre la détermination de l'emplacement d'affichage de l'objet, afin que l'emplacement de l'image réfléchie de l'utilisateur soit différent de l'emplacement d'affichage de l'objet.

6. Méthode d'affichage d'une image selon la revendication 4, la détermination de l'emplacement d'affichage de l'objet comprenant en outre la détermination d'une distance du dispositif d'affichage (110) à l'utilisateur, et la détermination d'au moins une d'une taille et d'une résolution de l'objet en fonction de la distance déterminée.

7. Support non transitoire d'enregistrement lisible par ordinateur sur lequel a été enregistré un logiciel pour l'exécution de la méthode selon la revendication 4.
